# EUROPEAN PATENT APPLICATION

(11) **EP 4 550 133 A1**
(43) Date of publication of application: **07.05.2025**
(21) Application number: 24741215.8
(22) Date of filing: 09.01.2024
(51) Int. Cl.: G06F 9/451

(54) **WINDOW MANAGEMENT METHOD AND SYSTEM, AND ELECTRONIC DEVICE**

(30) Priority: 13.01.2023 CN 202310073410
(71) Applicant: Huawei Technologies Co., Ltd., Shenzhen, Guangdong 518129 (CN)
(72) Inventor: BIAN, Sucheng, Shenzhen, Guangdong 518129 (CN); ZHANG, Chao, Shenzhen, Guangdong 518129 (CN); WANG, Yong, Shenzhen, Guangdong 518129 (CN); FAN, Xinxin, Shenzhen, Guangdong 518129 (CN)
(74) Representative: Epping - Hermann - Fischer
(86) International application number: PCT/CN2024/071257
(87) International publication number: WO 2024/149216

(57) **Abstract**

Embodiments of this application provide a window management method, a system, and an electronic device. The method is applied to the electronic device. The method includes: The electronic device displays a group control when displaying at least two windows; when receiving a user operation on the group control, the electronic device displays a first group icon corresponding to the at least two windows, where the first group icon indicates a first window group obtained by grouping the at least two windows; and the electronic device manages the first window group when receiving a user operation on the first group icon. **In** the method, the electronic device can conveniently and efficiently manage the windows through the group control and the first group icon.

## Description

This application claims priority to Chinese Patent Application No. 202310073410.8, filed with the China National Intellectual Property Administration on January 13, 2023 and entitled "WINDOW MANAGEMENT METHOD, SYSTEM, AND ELECTRONIC DEVICE", which is incorporated herein by reference in its entirety.

### TECHNICAL FIELD

Embodiments of this application relate to the field of electronic technologies, and in particular, to a window management method, a system, and an electronic device.

### BACKGROUND

When using an electronic device for office work, a user usually opens a plurality of application windows, and different application windows are used to complete different tasks. Therefore, when the user switches between different tasks, the electronic device usually needs to manage the windows displayed on a screen.

Currently, there are two methods for managing the plurality of windows by the electronic device. A first method is a virtual desktop solution in which an operating system (like a Windows system or a macOS system) supports creation of a plurality of virtual desktops, and a plurality of windows may be displayed on each virtual desktop. For example, the electronic device may create a desktop A and a desktop B, and display a plurality of windows related to a task 1 in space of the desktop A and a plurality of windows related to a task 2 in space of the desktop B according to a user requirement, so that the user can switch between windows corresponding to the tasks by switching between the virtual desktops. A second method is a stage manager solution in which the electronic device displays, on a left side of the screen, a thumbnail of a window recently opened and used by the user, and the electronic device can further quickly switch to the window for display in response to a user operation of tapping the thumbnail on the left side by the user, and a plurality of windows can be dragged into a group to form a task group.

However, the foregoing window management methods both require cumbersome user operations, and user experience is poor. How to implement convenient and efficient window management is a problem that needs to be resolved urgently in the industry.

### SUMMARY

This application provides a window management method, a system, and an electronic device. In the method, windows can be conveniently and efficiently managed through a group control and a first group icon.

According to a first aspect, an embodiment of this application provides a window management method, applied to an electronic device. The method includes: The electronic device displays a group control when displaying at least two windows; when receiving a user operation on the group control, the electronic device displays a first group icon corresponding to the at least two windows, where the first group icon indicates a first window group obtained by grouping the at least two windows; and the electronic device manages the first window group when receiving a user operation on the first group icon.

During implementation of this embodiment of this application, the electronic device may display the group control when displaying the at least two windows, and may group the at least two windows into the first window group based on the user operation on the group control. The electronic device may further manage the first window group through the first group icon. According to this method, a plurality of windows can be conveniently and efficiently grouped and a window group can be managed without a plurality of user operations, thereby improving user experience.

With reference to the first aspect, in a possible implementation, the method further includes: The electronic device changes a display style of the at least two windows from a first style to a second style when receiving the user operation on the group control.

During implementation of this embodiment of this application, the electronic device may change a display style of a window after grouping the at least two windows into a window group. According to this method, a user can clearly perceive whether the windows are grouped, thereby improving user experience.

With reference to the first aspect, in a possible implementation, the display style includes at least one of a style of a title bar, a style of a control, and a style of a window border, and the style includes at least one of a color, a pattern, and an area.

With reference to the first aspect, in a possible implementation, a color of the first group icon is the same as a color of the second style.

During implementation of this embodiment of this application, the electronic device may display a window corresponding to a window group and a group icon in a same color. According to this method, the user can clearly distinguish between the window corresponding to the window group and the group icon, thereby improving user experience.

With reference to the first aspect, in a possible implementation, the at least two windows are windows that are not completely shielded in windows running in a foreground or windows running in a foreground.

During implementation of this embodiment of this application, the electronic device may group windows running in the foreground into a window group, or may group only windows that are visible to the user and that run in the foreground into a window group. This method can meet a personalized requirement of the user.

With reference to the first aspect, in a possible implementation, the at least two windows are ungrouped windows.

With reference to the first aspect, in a possible implementation, after the displaying the first group icon corresponding to the at least two windows, the method further includes: When receiving a user operation that indicates to display a window corresponding to a first icon, the electronic device displays the window corresponding to the first icon, where the first icon is an icon corresponding to the ungrouped window or a group icon corresponding to a second window group, and the second window group includes a plurality of windows.

With reference to the first aspect, in a possible implementation, the method further includes: The electronic device minimizes the first window group when receiving the user operation that indicates to display the window corresponding to the first icon.

During implementation of this embodiment of this application, when receiving the first icon, the electronic device may minimize the first window group, and display only the window corresponding to the first icon. This method can avoid simultaneous display between window groups and between a window group and an ungrouped window, thereby satisfying user requirements.

With reference to the first aspect, in a possible implementation, the displaying a window corresponding to the first icon includes: The electronic device displays, at a top level, the window corresponding to the first icon.

During implementation of this embodiment of this application, after displaying the first window group, if receiving the user operation that indicates to display the window corresponding to the first icon, the electronic device may display the window corresponding to the first icon above the first window group. This method can be used to adjust a display level relationship between window groups and a display level relationship between a window group and an ungrouped window.

With reference to the first aspect, in a possible implementation, after the electronic device displays, at the top level, the window corresponding to the first icon, the method further includes: When receiving a user operation on the second icon, the electronic device displays the first window group on an upper level of the second window group, and displays, at the top level, a window corresponding to the second icon.

With reference to the first aspect, in a possible implementation, a third icon is an icon corresponding to an application in the first window group, and the method further includes: When receiving a user operation on the third icon, the electronic device displays the first window group, and displays, at the top level, a window corresponding to the third icon.

During implementation of this embodiment of this application, the electronic device may display, at the top level in response to an icon corresponding to an application in the first window group, a window corresponding to the icon. This method can be used to adjust a display level relationship between windows in a window group.

With reference to the first aspect, in a possible implementation, the first group icon includes a thumbnail and/or a level relationship diagram of the first window group, the thumbnail of the first window group indicates a layout of the at least two windows in a user interface, and the level relationship diagram indicates levels at which the at least two windows are located.

With reference to the first aspect, in a possible implementation, the at least two windows include a first window, and after receiving the user operation on the group control, the method further includes: The electronic device displays a first control in a title bar of the first window, where the first control indicates that the first window belongs to the first window group; and the electronic device displays at least one of an exit control and a second control when detecting a user operation on the first control, where the exit control is used for the first window to exit the first window group, the second control is used to add the first window to a third window group, and the third window group includes a plurality of windows.

With reference to the first aspect, in a possible implementation, that the electronic device manages the first window group when receiving a user operation on the first group icon includes: The electronic device displays at least one of an ungroup control, a close control, and a move control when receiving a first user operation on the first group icon, where the ungroup control is used to delete the first group icon and dismiss the first window group, the close control is used to close the first window group, and the move control is used to move the first window group to a selected desktop.

According to a second aspect, this application provides an electronic device. The electronic device may include a memory and a processor. The memory may be configured to store a computer program. The processor may be configured to invoke the computer program, so that the electronic device is enabled to perform the method according to the first aspect or any one of the possible implementations of the first aspect.

According to a third aspect, this application provides a computer program product including instructions. When the computer program product is run on an electronic device, the electronic device is enabled to perform the method according to the first aspect or any one of the possible implementations of the first aspect.

According to a fourth aspect, this application provides a computer-readable storage medium, including instructions. When the instructions are run on an electronic device, the electronic device is enabled to perform the method according to the first aspect or any one of the possible implementations of the first aspect.

It can be understood that the electronic device provided in the second aspect, the computer program product provided in the third aspect, and the computer-readable storage medium provided in the fourth aspect are all configured to perform the method provided in embodiments of this application. Therefore, for beneficial effects that can be achieved by the electronic device provided in the second aspect, the computer program product provided in the third aspect, and the computer-readable storage medium provided in the fourth aspect, refer to the beneficial effects in the corresponding method. Details are not described herein again.

### BRIEF DESCRIPTION OF DRAWINGS

FIG. 1 is a diagram of a hardware structure of an electronic device 100 according to an embodiment of this application;
FIG. 2 is a block diagram of a software structure of an electronic device 100 according to an embodiment of this application;
FIG. 3A to FIG. 3F are some example user interfaces implemented on an electronic device according to an embodiment of this application;
FIG. 4A to FIG. 4D are some example user interfaces implemented on an electronic device when a first grouping rule is used according to an embodiment of this application;
FIG. 5A to FIG. 5D are some example user interfaces implemented on an electronic device when a second grouping rule is used according to an embodiment of this application;
FIG. 6A to FIG. 6I are some example user interfaces implemented on an electronic device when a first window switching rule is used;
FIG. 7A to FIG. 7H are some example user interfaces implemented on an electronic device when a second window switching rule is used;
FIG. 8A and FIG. 8B are diagrams of a group icon according to an embodiment of this application;
FIG. 9A to FIG. 9E and FIG. 10A to FIG. 10C are user interfaces when an electronic device performs window management according to an embodiment of this application;
FIG. 11A and FIG. 11B are diagrams of a title bar of a window according to an embodiment of this application; and
FIG. 12Ato FIG. 12C and FIG. 13A to FIG. 13C are user interfaces when an electronic device moves a window group according to an embodiment of this application.

### DESCRIPTION OF EMBODIMENTS

The technical solutions according to embodiments of this application are clearly and completely described in the following with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language such as Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphic manner. The user interface may be a visual interface element like a text, an icon, a button, a menu, a tab, a text box, a dialog box, a status bar, a navigation bar, or a Widget that is displayed on a display of the electronic device.

Embodiments of this application provide a window management method, an electronic device, and a system. According to the method, the electronic device may display a group control when at least two ungrouped windows are in an open state. Further, when detecting a user operation on the group control, the electronic device displays the at least two ungrouped windows as grouped windows in a window group. Further, the electronic device may manage all windows in the window group in response to a user operation, where the management includes simultaneous displaying, simultaneous minimizing, and simultaneous closing. The open state includes a displayed state and a shielded state. The displayed state is a state visible to a user. The shielded state is a shielded invisible state.

It should be noted that, in embodiments of this application, windows are divided into ungrouped windows and grouped windows, where a window group includes at least two grouped windows, the at least two grouped windows are in an association relationship, and the association relationship is used for simultaneous display, simultaneous shielding, or simultaneous minimization.

The electronic device may be specifically a mobile phone, a tablet computer, a desktop computer, a laptop computer, a handheld computer, a notebook computer, an ultra-mobile personal computer (ultra-mobile personal computer, UMPC), a netbook, and the like. An example embodiment of the electronic device includes but is not limited to a portable electronic device using iOS^{®}, Android^{®}, Harmony^{®}, Windows^{®}, Linux, or another operating system. The electronic device may alternatively be another portable electronic device, such as a laptop (Laptop). It should be further understood that, in some other embodiments, the electronic device may not be a portable electronic device but a desktop computer.

The following describes an example of an electronic device provided in embodiments of this application.

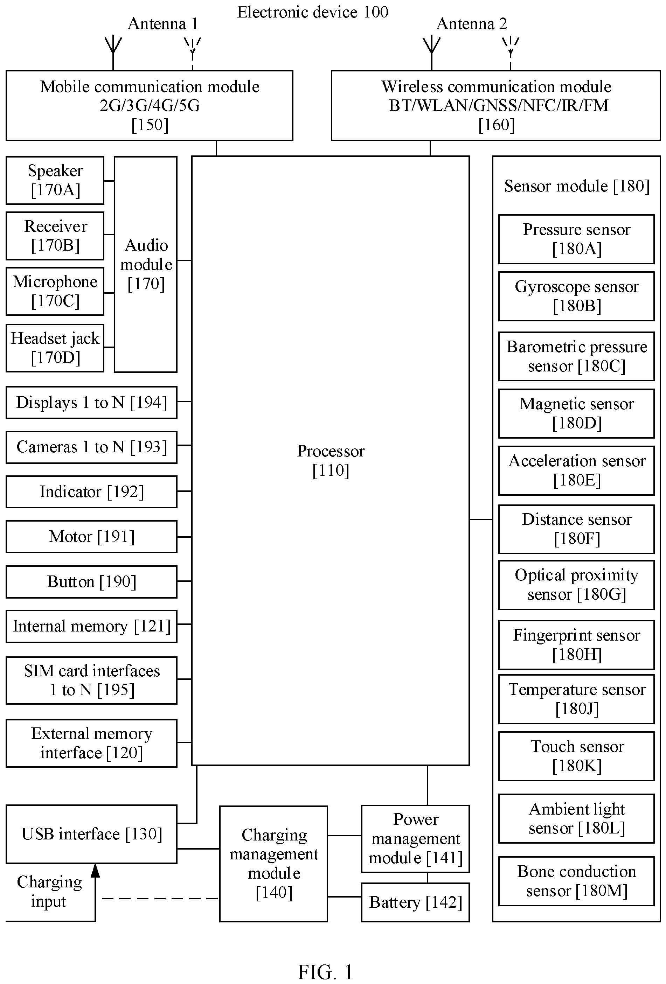

FIG. 1 is a diagram of a hardware structure of an electronic device 100.

The electronic device 100 is used as an example below to describe embodiments in detail. It should be understood that, the electronic device 100 may have more or fewer parts than those shown in the figure, may combine two or more parts, or may have a different part configuration. Components shown in the figure may be implemented by hardware that includes one or more signal processing and/or application-specific inter-integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be- sent data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The SIM card interface may be configured to communicate with the SIM card interface 195, to implement a function of transmitting data to an SIM card or reading data in a SIM card.

The USB interface 130 is an interface that conforms to a USB standard specification, and may be specifically a mini USB interface, a micro USB interface, a USB Type-C interface, or the like. The USB interface 130 may be configured to be connected to a charger to charge the electronic device 100, or may be configured to transmit data between the electronic device 100 and a peripheral device, or may be configured to connect to a headset for playing audio through the headset. The interface may be further configured to connect to another electronic device like an AR device.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from a charger. The charger may be a wireless charger or a wired charger.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same device as at least some modules of the processor 110.

The modem processor may include a modulator and a demodulator. The modulator is configured to modulate a to-be- sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light-emitting diode (quantum dot light emitting diodes, QLED), or the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through a lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. Therefore, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external memory card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system and an application required by at least one function (for example, a facial recognition function, a fingerprint recognition function, and a mobile payment function). The data storage area may store data (such as facial information template data and a fingerprint information template) created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some function modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A. The receiver 170B, also referred to as an "earpiece", is configured to convert an electrical audio signal into a sound signal. When a call is answered or a voice message is received through the electronic device 100, the receiver 170B may be put close to a human ear to listen to a voice. The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change of the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a moving posture of the electronic device 100. In some embodiments, an angular velocity of the electronic device 100 around three axes (that is, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a motion-sensing game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover based on the magnetic sensor 180D. In some embodiments, when the electronic device 100 is a clamshell phone, the electronic device 100 may detect opening and closing of a flip cover based on the magnetic sensor 180D. Further, a feature like automatic unlocking upon opening of the flip cover is set based on a detected opening or closing state of the flip cover.

The acceleration sensor 180E may detect magnitude of acceleration of the electronic device 100 in various directions (usually on three axes). A magnitude and a direction of gravity may be detected when the electronic device 100 is still. The acceleration sensor 180E may be further configured to identify a posture of the electronic device, and is used in switching between a landscape mode and a portrait mode or an application like a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor located near the temperature sensor 180J, to reduce power consumption for thermal protection. In some other embodiments, when the temperature is lower than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142, to avoid abnormal shutdown caused by a low temperature.

The touch sensor 180K is also referred to as a touch panel. The touch sensor 180K may be disposed on the display 194, and a touchscreen, also referred to as a "touchscreen", is formed by the touch sensor 180K and the display 194. The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may also be disposed on a surface of the electronic device 100 at a location different from that of the display 194.

The button 190 includes a power button, a volume button, and the like. The button 190 may be a mechanical button, or may be a touch button. The electronic device 100 may receive a button input, and generate a button signal input related to user settings and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, may be configured to indicate a charging status and a power change, or may be configured to synthesize requests, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 simultaneously. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In embodiments of this application, the electronic device 100 may perform, through the processor 110, the window management method provided in embodiments of this application, and display, through the display 194, the user interface provided in embodiments of this application.

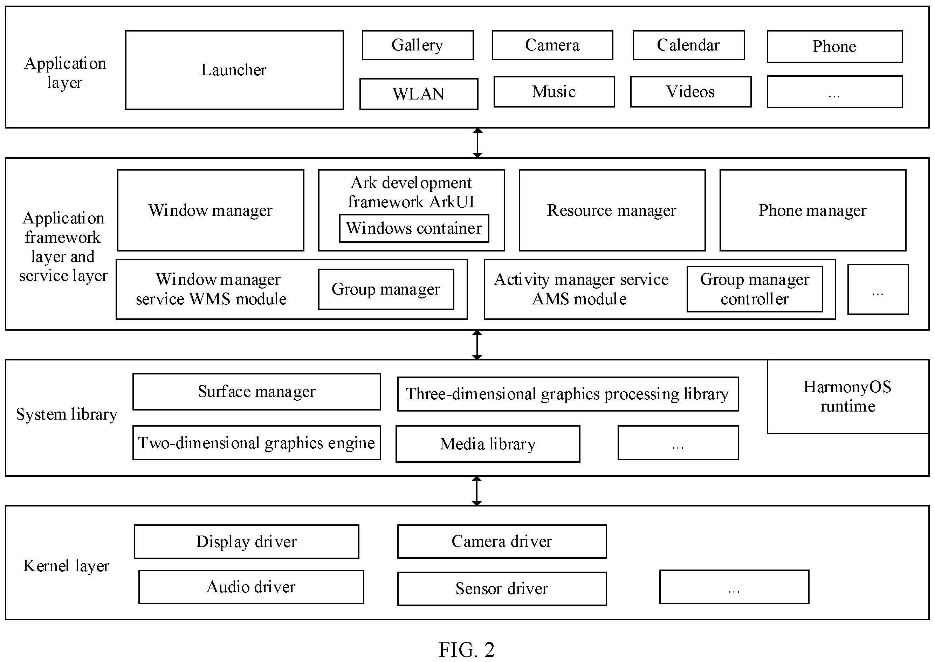

FIG. 2 is a block diagram of a software structure of an electronic device 100 according to an embodiment of this application.

A software system of the electronic device 100 may use a layered architecture, an event-driven architecture, a microkernel architecture, a micro service architecture, a cloud architecture, or the like. For example, a software system of the electronic device 100 may include but is not limited to iOS^{®}, Android^{®}, Harmony^{®}, Windows^{®}, Linux, or another operating system. Harmony^{®} is the Huawei HarmonyOS. FIG. 2 uses the HarmonyOS as an example for description.

As shown in FIG. 2, in the layered architecture, software is divided into several layers, and each layer has a clear role and task. The layers communicate with each other through a software interface. In some embodiments, the Android system is divided into four layers: an application layer, an application framework layer, a HarmonyOS runtime (Runtime) and system library, and a kernel layer from top to bottom.

The application layer may include a series of application packages.

As shown in FIG. 2, the application layer may further include a launcher (Launcher), and the application packages may include applications (which may also be referred to as applications) such as Camera, Gallery, Calendar, Phone, Maps, Navigation, WLAN, Bluetooth, Music, Videos, and Messages.

The launcher is configured to display grouped windows, where the grouped windows may include a group identifier, a preview window, and the like.

The application framework layer provides an application programming interface (application programming interface, API) and a programming framework for an application at the application layer. The application framework layer includes some predefined functions.

As shown in FIG. 2, the application framework layer may include a window manager (Window Manager), an Ark development framework (ArkUI), a window manager service (Window Manager Service, WMS) module, an activity manager service (Ability Manager Service, AMS) module, a phone manager, a resource manager, a notification manager, and the like. The AMS may also be referred to as an ability manager service module.

In embodiments of this application, a window grouping function is provided by modifying modules such as the WMS and the AMS. Windows are grouped by group, so that unified management can be performed, and a convenient group management mechanism is provided for a user.

The window manager is configured to manage a window program. The window manager may obtain a size of a display, determine whether there is a status bar, perform screen locking, take a screenshot, and the like.

The ArkUI includes a windows container (Windows Container). The windows container is mainly responsible for adapting a title bar control, a style change, and an interaction behavior of a group in a title bar (joining another window group and exiting a window group). After receiving group information, the ArkUI changes a title bar style of a window through the windows container based on the group information, where the group information includes a window identifier (Identity document, id) in a window group.

In embodiments of this application, modules such as the WMS and the AMS notify the ArkUI of the group information, where the group information may include an identifier id of a window, and the like. The ArkUI modifies a display style of a window based on the group information, and this may be specifically performed by the windows container in the ArkUI.

The WMS includes a group manager (Group Manager, GroupMgr). In the WMS, a plurality of windows can be minimized or displayed simultaneously, to start or minimize group tasks simultaneously, and control level query of the group tasks. The GroupMgr is used to maintain and manage group information and provide related callback interfaces for triggering listening and callback when a group changes.

The AMS includes a group manager controller (Group Manager Controller). In the AMS, a group-related interface is adapted. This interface is used to query groups and provides group interfaces of a related group through this module.

In embodiments of this application, the launcher invokes a group-related interface to implement window display. For example, the launcher may invoke the group-related interface to change display of a taskbar (for example, a dock bar). The group-related interface may include interfaces such as query, change, and subscription modification notification.

The phone manager is configured to provide a communication function of the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without a user interaction. For example, the notification manager is configured to notify download completion, give a message notification, and the like. The notification manager may alternatively display a notification in a form of a chart or a scroll bar text in a status bar at the top of the system, for example, a notification of an application run in the background, or may display a notification in a form of a dialog interface on the screen. For example, text information is displayed in the status bar, an alert tone is made, the electronic device vibrates, or the indicator blinks.

The runtime (Runtime) includes a core library and a virtual machine. The runtime is responsible for scheduling and management of the system.

The core library includes two parts: a performance function that needs to be invoked by a programming language (for example, Java language), and a system core library.

The application layer and the application framework layer run on a virtual machine. The virtual machine executes programming files (for example, Java files) of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a two-dimensional graphics engine (for example, SGL).

The surface manager is configured to manage a display subsystem, and provide fusion of 2-dimensional (2-Dimensional, 2D) and 3-dimensional (3-Dimensional, 3D) layers to a plurality of applications.

The media library supports playing and recording in a plurality of commonly used audio and video formats, and static image files. The media library may support a plurality of audio and video encoding formats, for example, MPEG-4, H.264, MP3, AAC, AMR, JPG, and PNG.

The 3-dimensional graphics processing library is configured to implement drawing of 3D graphics, image rendering, synthesis, layer processing, and the like.

The 2D graphics engine is a drawing engine for 2D drawing.

The kernel layer is a layer between hardware and software. The kernel layer includes at least a display driver, a camera driver, an audio driver, a sensor driver, and a virtual card driver.

The following describes an example of a working process of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a tap operation, and a control corresponding to the - tap operation is a control of a camera application icon is used. The camera application invokes an interface of the application framework layer to enable the camera application, then enables the camera driver by invoking the kernel layer, and captures a static image or a video through the camera 193.

The following describes a window management method with reference to a user interface implemented on an electronic device provided in an embodiment of this application.

It should be noted that in embodiments of this application, a user operation may be a touch operation (for example, a tap operation, a touch and hold operation, a slide-up operation, a slide-down operation, or a side-slide operation) of a user, or may be a non-contact operation (for example, an air gesture or a mouse operation), or may be a voice instruction of a user. This is not specifically limited in embodiments of this application. For ease of description, the following embodiments are described by using a touch control operation of a user as an example.

**First, an embodiment in which an electronic device groups at least two ungrouped windows by one click is described.**

In some embodiments, the electronic device may display a group control when the at least two ungrouped windows are in an open state. In this way, when detecting a user operation on the group control, the electronic device displays the at least two ungrouped windows as grouped windows of one window group in response to the user operation. The open state includes a displayed state and a shielded state, and the shielded state is a shielded invisible state.

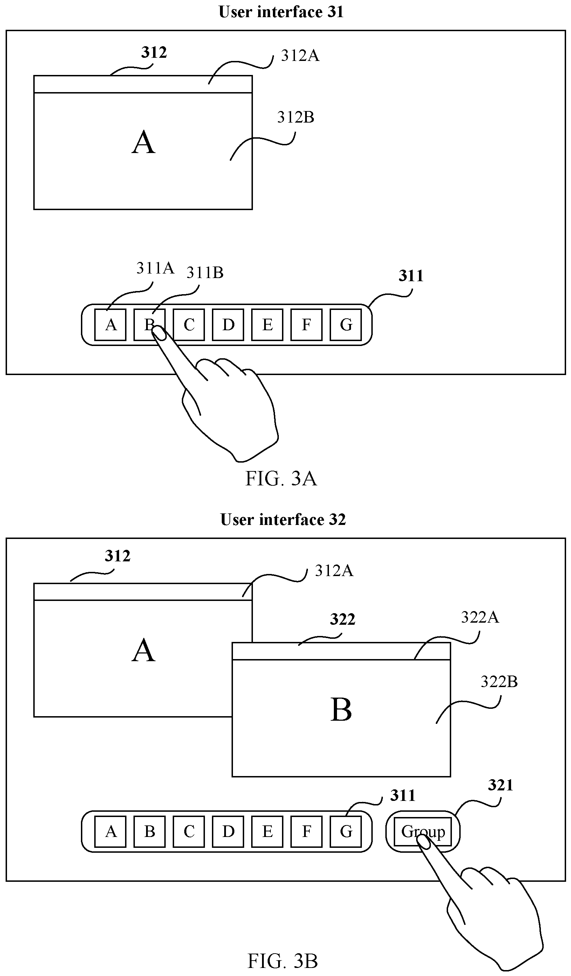

FIG. 3A to FIG. 3F are some example user interfaces implemented on an electronic device according to an embodiment of this application.

FIG. 3A is an example user interface 31 on the electronic device according to an embodiment of this application. As shown in FIG. 3A, the user interface 31 includes a taskbar 311 and a window A 312. The taskbar 311 includes icons corresponding to a plurality of windows, for example, an icon 311A corresponding to the window A 312. The window A 312 includes a title bar 312A and a preview window 312B.

For example, the icons in the taskbar 311 may be application icons corresponding to different applications, and a window corresponding to the application icon is one or more application windows of the application. As shown in FIG. 3A, the taskbar 311 includes the icon 311A and an icon 311B. The icon 311A may be an icon corresponding to an application A, and the icon 311A is used to display an application window corresponding to the application A. The icon 311B may be an icon corresponding to an application B, and the icon 311B is used to display an application window corresponding to the application B. It should be noted that the icons in the taskbar 311 may alternatively include icons of different application windows corresponding to a same application. For example, the icon 311A and the icon 311B are icons of different application windows corresponding to a same application. This is not limited herein.

In this embodiment of this application, for ease of description, the following uses an example in which the icons in the taskbar 311 are application icons corresponding to different applications for description. In this case, the icon 311A may be the icon corresponding to the application A, the icon 311A is used to display the application window corresponding to the application A, and the window A 312 may be the application window corresponding to the application A.

As shown in FIG. 3A, when detecting a user operation, the electronic device may display, in response to the user operation, a window corresponding to the icon 311B. For example, the electronic device may display a user interface 32 shown in FIG. 3B, where the user interface 32 includes a window B 322 corresponding to the icon 311B.

As shown in FIG. 3B, the user interface 32 may include the taskbar 311, the window A 312, a group control 321, and the window B 322, where the window B 322 includes a title bar 322A and a preview window 322B.

The window B 322 is the window corresponding to the icon 311B. For example, the icon 311B is the icon corresponding to the application B, and the window B 322 is the application window corresponding to the application B. In this case, the electronic device may display the window B 322 in response to the user operation on the icon 311B. The group control 321 is used to group ungrouped windows (namely, the window A 312 and the window B 322) in the interface into a group. For example, the group control may be independent of the taskbar, or may be a part of the taskbar.

In this embodiment of this application, the electronic device may display the group control when at least two ungrouped windows in an open state appear in the user interface. As shown in FIG. 3A, when detecting the user operation on the icon 311B, the electronic device displays, in response to the user operation, the window B 322 shown in FIG. 3B. In this case, both the window A 312 and the window B 322 are in the open state. Therefore, the electronic device displays the group control 321 shown in FIG. 3B. It should be noted that the open state includes a displayed state and a shielded state. For specific content of the displayed state and the shielded state, refer to related embodiments in the following, and details are not described herein.

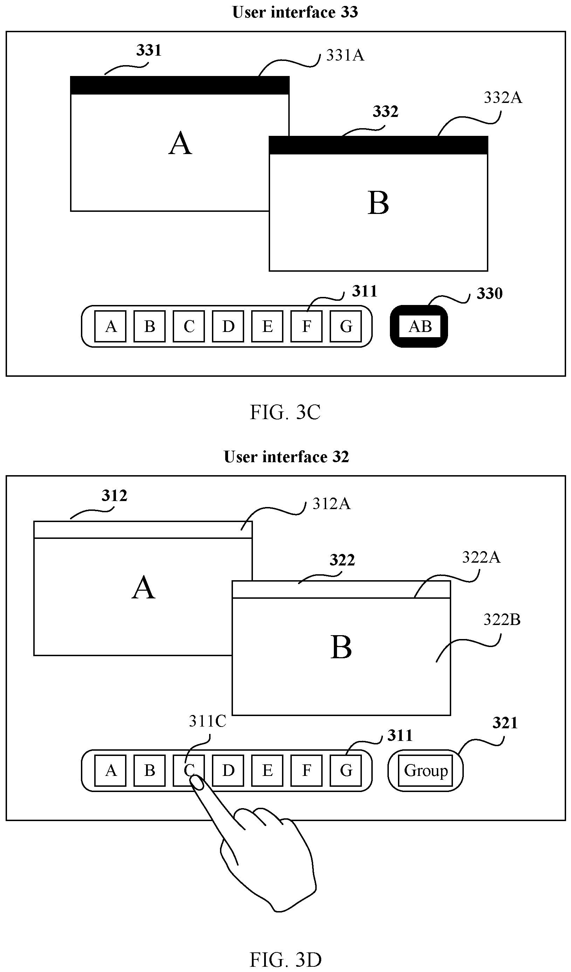

Further, when the electronic device detects a user operation on the group control 321 in the user interface 32 shown in FIG. 3B, the electronic device may display, in response to the user operation, the window A 312 and the window B 322 as grouped windows in a same window group. For example, the electronic device may display a user interface 33 shown in FIG. 3C.

The user interface 33 includes the taskbar 311, a group icon AB 330, a window A 331, and a window B 332. The window A 331 includes a title bar 331A, and the window B 332 includes a title bar 332A. The group icon AB 330 indicates that the window A 331 and the window B 332 are windows in a same window group (namely, a group AB). The window A 331 is the same as the window A 312 in the user interface 32 except that colors of the title bars are different, and the window B 332 is the same as the window B 322 in the user interface 32 except that colors of the title bars are different.

For example, in this embodiment of this application, a color of a title bar may indicate a group state of a window. A white title bar indicates that the group state of the window is an ungrouped state, and a non-white title bar indicates that the group state of the window is a grouped state. Title bars of a same color indicate that windows corresponding to the title bars of the same color are windows in a same window group. A color of a group icon indicates a color of title bars of windows in a window group. It should be understood that, in another embodiment of this application, the electronic device may further indicate the group state of the window in another manner, for example, a style of the title bar. The style of the title bar may include but is not limited to a color and a pattern of the title bar. For another example, the electronic device may indicate the group state of the window through another control, and the another control may be a control in the title bar, a window border, or the like. This is not limited in embodiments of this application.

As shown in FIG. 3B, the title bar 312A of the window A 312 is white. In other words, the window A 312 in the user interface 32 is an ungrouped window. The title bar 322A of the window B 322 is white. In other words, the window B 322 in the user interface 32 is an ungrouped window. As shown in FIG. 3C, the title bar 331A of the window A 331 is black, the title bar 332A of the window B 332 is black, and the group icon AB 330 is black. It can be learned that, in the user interface 33, the window A 331 and the window B 332 are the grouped windows in the window group corresponding to the group icon AB 330.

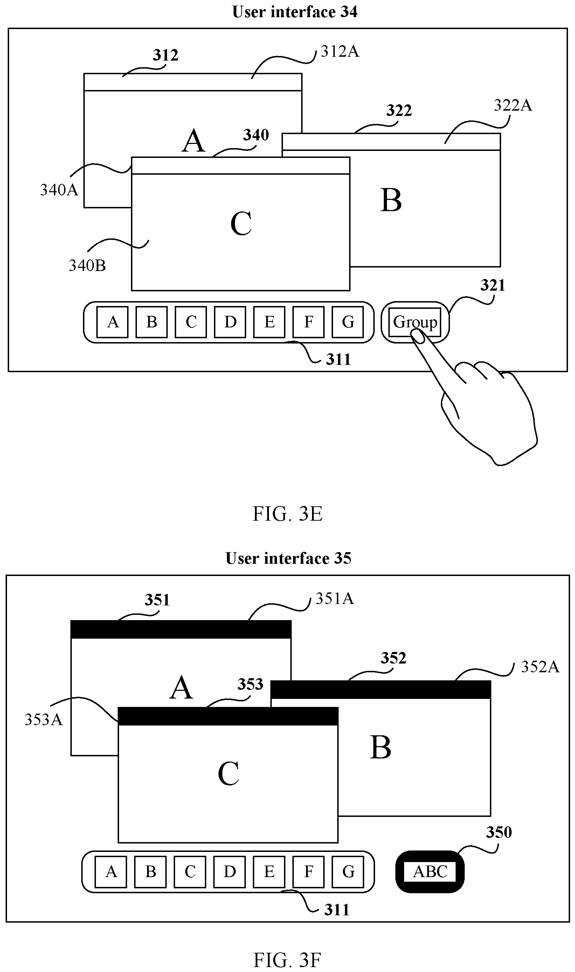

In some other embodiments, as shown in FIG. 3D, when detecting a user operation on an icon 311C, the electronic device displays, in response to the user operation, a window corresponding to the icon 311C. For example, the electronic device may display a user interface 34 shown in FIG. 3E, and the user interface 34 includes a window C 340 corresponding to the icon 311C.

As shown in FIG. 3E, the user interface 34 includes the taskbar 311, the window A 312, the group control 321, the window B 322, and the window C 340. The window C 340 includes a title bar 340A and a preview window 340B. The window C 340 is a window corresponding to the icon 311C. For example, the icon 311C is an icon corresponding to an application C, and the window C 340 is an application window corresponding to the application C. In this case, the electronic device may display the window C 340 in response to the user operation on the icon 311C.

Further, as shown in FIG. 3E, when detecting a user operation on the group control 321, the electronic device may display the window A 312, the window B 322, and the window C 340 as grouped windows in a same window group in response to the user operation. For example, the electronic device may display a user interface 35 shown in FIG. 3F.

The user interface 35 may include the taskbar 311, a group icon ABC 350, a window A 351, a window B 352, and a window C 353. The window A 351 includes a title bar 351A, the window B 352 includes a title bar 352A, and the window C 353 includes a title bar 353A. The group icon ABC 350 indicates that the window A 351, the window B 352, and the window C 353 are grouped windows in a same group. The group icon ABC 350 is used to manage windows corresponding to the group, namely, the window A 351, the window B 352, and the window C 353. The windows in the user interface 35 are the same as the windows in the user interface 34 except that colors of the title bars are different.

As shown in FIG. 3F, the title bar 351A of the window A 351 is black, the title bar 352A of the window B 352 is black, the title bar 353A of the window C 353 is black, and the group icon ABC 350 is black. In other words, in the user interface 35, the window A 351, the window B 352, and the window C 353 are grouped windows in a window group corresponding to the group icon ABC 350.

In some other embodiments, when determining at least two ungrouped windows as a window group, the electronic device may display only a group icon corresponding to the window group, or change only a style change of the windows. For example, in FIG. 3A to FIG. 3F, only a group icon may appear, and a color of a title bar does not change. For another example, in FIG. 3A to FIG. 3F, only a color of a title bar may change, and a group icon does not appear.

Optionally, when determining that the at least two windows are grouped, the electronic device may further change display styles of the at least two windows to a preset style within preset duration, and restore, after the preset duration, the display styles of the at least two windows to the display styles before the at least two windows are grouped. For example, when detecting the user operation on the group control 321 in the user interface 32 shown in FIG. 3B, the electronic device displays the group icon AB 330 in response to the user operation, changes display styles of the window A and the window B from a first style to a second style, and changes the display styles of the window A and the window B from the second style to the first style after the preset duration. A difference between the first style and the second style may be that window sizes are different, colors of window title bars are different, or the like. The preset duration may be a short time period, so that an intuitive prompt is provided to a user at an instant when the windows are grouped.

Further, the electronic device may separately set different grouping rules based on the displayed state and the shielded state of the ungrouped windows.

**Then, the following describes two grouping rules as an example.**

For example, a first grouping rule is: A group control is displayed when at least two ungrouped visible windows exist in a user interface. The group control is used to determine the ungrouped visible windows in the user interface as a window group. The visible windows are windows in the displayed state.

In some embodiments, when the at least two ungrouped visible windows appear in the user interface, the electronic device may display the group control. Further, when detecting a user operation on the group control, the electronic device displays group identifiers in the two visible windows. The group identifiers indicate that the two visible windows are windows in a same group. The visible windows are windows that are visible to a user and that are displayed in the user interface. The group identifier may be a color, a pattern, or the like of the control in the window. For example, a preset color of a title bar of the window indicates that the window is a grouped window.

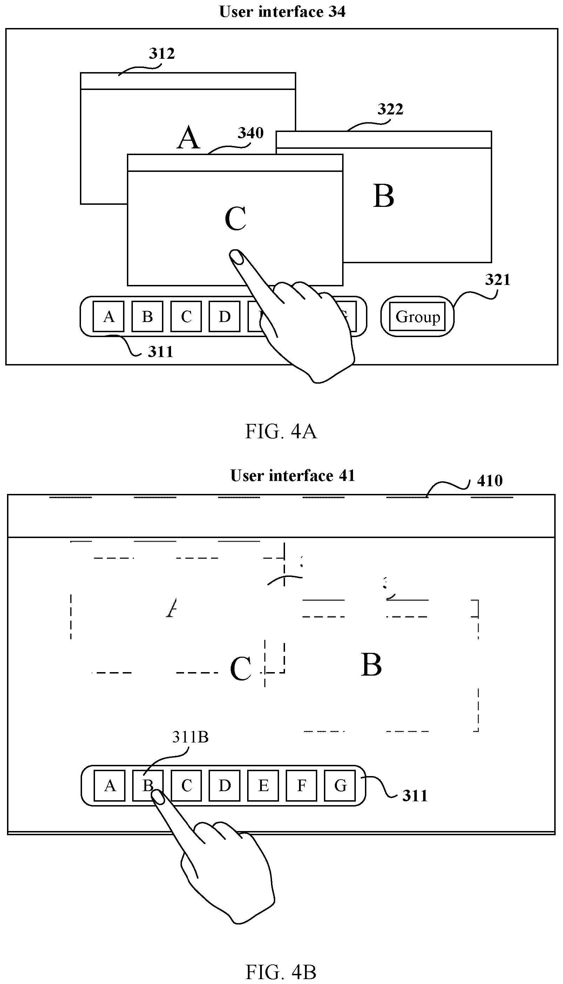

FIG. 4A to FIG. 4D are some example user interfaces implemented on the electronic device when the first grouping rule is used according to an embodiment of this application.

In some embodiments, as shown in FIG. 4A, when detecting a user operation on the window C 340 in the user interface 34, the electronic device displays the window C 340 in full screen. For example, the electronic device may display the user interface 41 shown in FIG. 4B, and the group control 321 in the user interface disappears.

The user operation on the window C 340 in the user interface 34 is used to display the window C 340 in full screen. The user operation may be specifically an operation like tap or double-tap, and this is not limited herein.

As shown in FIG. 4B, the user interface 41 includes the taskbar 311 and the window C 410. The window C 410 in the user interface 41 and the window C 340 in the user interface 34 are different only in sizes. In this embodiment of this application, a dashed line indicates a window in a shielded state, and the window in a shielded state is an invisible window that is running in a foreground of the electronic device but is shielded. As shown in FIG. 4B, the window C 410 in the user interface 41 shields the window A 312 and the window B 322, that is, the window A 312 and the window B 322 are in a shielded state.

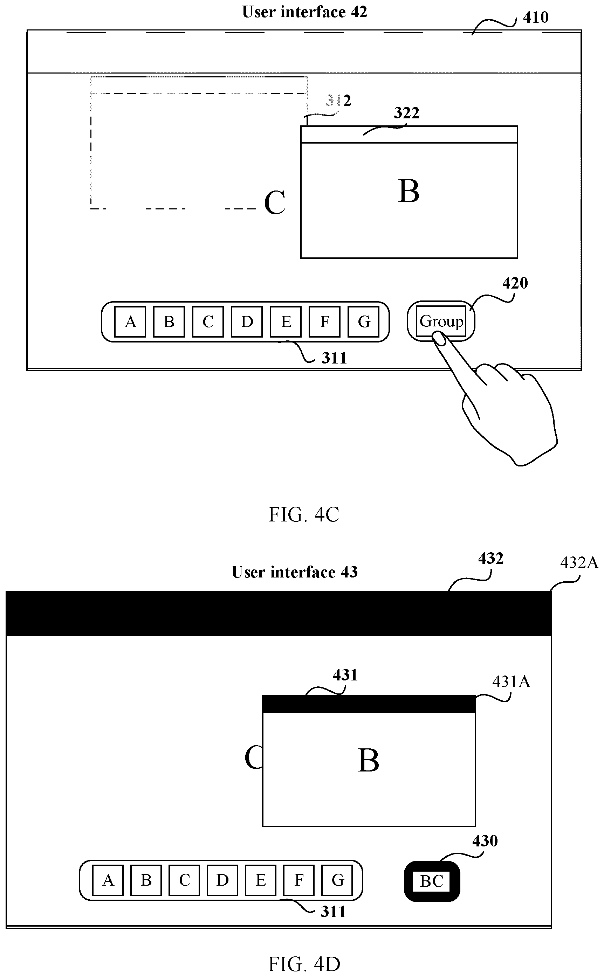

As shown in FIG. 4B, when detecting a user operation on the icon 311B, the electronic device displays a window corresponding to the icon 311B. For example, the electronic device may display a user interface 42 shown in FIG. 4C. The user interface 42 includes the window B 322 corresponding to the icon 311B. The user interface 42 includes the taskbar 311, the window B 322, the window C 410, and a group control 420. The group control 420 is used to group ungrouped visible windows in the user interface into a window group.

Further, when detecting a user operation on the group control 420 in the user interface 42 shown in FIG. 4C, the electronic device may display ungrouped visible windows (that is, the window B 322 and the window C 410) in the user interface 42 as grouped windows in one group window in response to the user operation. For example, the electronic device may display a user interface 43 shown in FIG. 4D.

The user interface 43 includes the taskbar 311, a BC group icon 430, a window B 431, and a window C 432. The window B 431 includes a title bar 431A, and the window C 432 includes a title bar 432A. The window B 431 and the window B 322 in the user interface 42 are different only in colors of title bars, and the window C 432 and the window C 410 in the user interface 42 are different only in colors of title bars. The title bar 431A and the title bar 432A in the user interface 43 are black, and indicate that the window B 431 and the window C 432 are windows in a same window group. The BC group icon 430 indicates that the window B 431 and the window C 432 are windows in a same window group. The BC group icon 430 may be used to display or minimize windows corresponding to the icon, that is, the window B 431 and the window C 432.

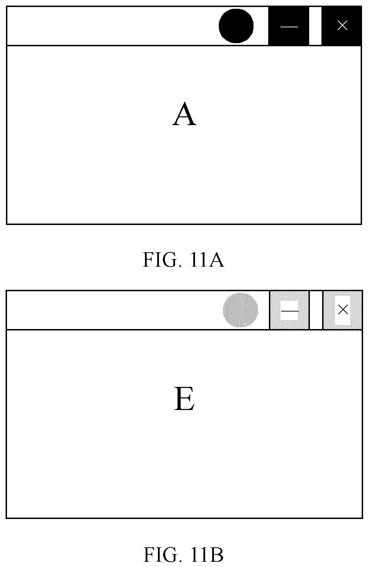

In this embodiment of this application, a window in the window group may also be separately minimized by tapping a minimization control in the window. For example, the electronic device displays the window B 431 and the window C 432 that are corresponding to the BC group icon 430, and the window B 431 and the window C 432 each include a minimization control. In this case, the electronic device may minimize only the window B 431 when detecting an operation on the minimization control in the window B 431. For example, the minimization control may be a "-" control in a window title bar in FIG. 11A and FIG. 11B.

It should be noted that the shielded window A 312 in FIG. 4C may be in a shielded state or a minimized state in the user interface 43 in FIG. 4D, and this is not limited herein. FIG. 4C shows an example in which the window A 312 is in a shielded state. In some embodiments, a state of the window A 312 in the user interface 43 is related to a window switching rule. For details, refer to the following related embodiments. Details are not described herein.

For example, the second grouping rule may be: An electronic device displays a group control when running at least two ungrouped foreground windows, where the group control is used to determine the ungrouped foreground windows in a user interface as a window group; and further, the electronic device may display the ungrouped foreground windows as grouped windows in the window group in response to a user operation on the group control. The foreground windows are application windows running in a foreground of the electronic device, and the foreground windows may be in a displayed state or may be in a shielded state. In this embodiment of this application, a window that is not minimized and is not closed is referred to as a foreground window. It should be understood that a window that is not closed and that is not minimized but is shielded (invisible to a user) is also a foreground running window (that is, a foreground window).

In some embodiments, when the at least two ungrouped foreground windows exist, the electronic device may display the group control; and further, when detecting a user operation on the group control, the electronic device displays group identifiers on the two foreground windows, where the group identifiers indicate that the two foreground windows are windows in a same group. The group identifier may be a color, a pattern, or the like of the control in the window. For example, a preset color of a title bar of the window indicates that the window is a grouped window.

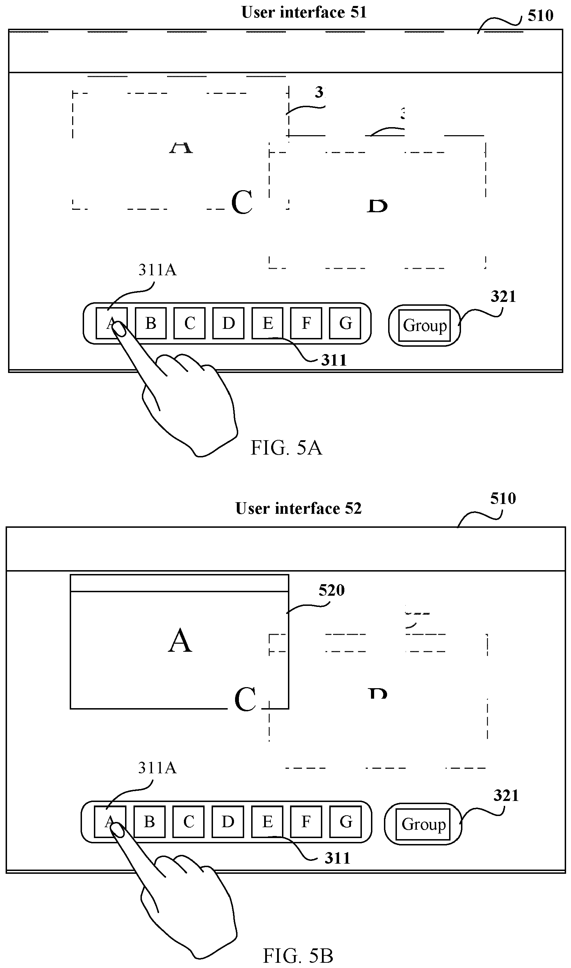

FIG. 5A to FIG. 5D are some example user interfaces implemented on the electronic device when the second grouping rule is used according to an embodiment of this application.

In some embodiments, as shown in FIG. 4A, the electronic device displays the user interface 34. When detecting a user operation on the window C 340 in the user interface 34 shown in FIG. 4A, the electronic device displays the window C 340 in full screen. For example, the electronic device may display a user interface 51 shown in FIG. 5A, and the group control 321 in the user interface 51 does not disappear.

The user interface 51 includes the taskbar 311, the group control 321, and a window C 510. The user operation on the window C 340 in the user interface 34 is used to display the window C 340 in full screen. The user operation may be specifically an operation like tap or double-tap, and this is not limited herein. The window C 510 and the window C 340 in the user interface 34 are different only in sizes. In this embodiment of this application, a dashed line indicates a shielded invisible window. As shown in FIG. 5A, the window C 410 in the user interface 51 shields the window A 312 and the window B 322, and the window A 312 and the window B 322 are invisible foreground windows. The group control 321 is used to group ungrouped foreground windows in the user interface into a window group.

As shown in FIG. 5A, when detecting a user operation on the icon 311A in the user interface 51, the electronic device may display a window corresponding to the icon 311A, for example, may display a user interface 52 shown in FIG. 5B. The user interface 52 includes a window A 520 corresponding to the icon 311A.

As shown in FIG. 5B, the user interface 52 includes the taskbar 311, the group control 321, the window C 510, and the window A 520.

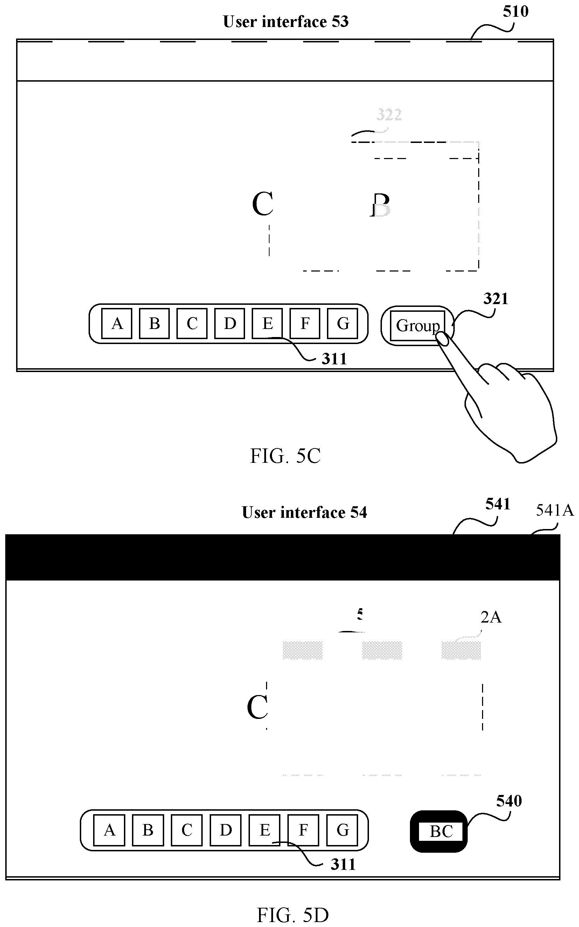

Further, as shown in FIG. 5B, when detecting a user operation on the icon 311A, the electronic device minimizes the window corresponding to the icon 311A, that is, the window A 520. For example, the electronic device may display a user interface 53 shown in FIG. 5C. The user interface 52 includes the taskbar 311, the group control 321, and the window C 510. The window B 322 in FIG. 5C is a shielded foreground window.

Further, when the electronic device detects a user operation on the group control 321 in the user interface 53 shown in FIG. 5C, the electronic device may display a user interface 54 shown in FIG. 5D in response to the user operation.

The user interface 54 includes the taskbar 311, a BC group icon 540, and a window C 541, where the window C 541 includes a title bar 541A, and the window C 541 and the window C 510 in the user interface 53 are different only in colors of title bars. As shown in FIG. 5D, a window B 542 is a shielded foreground window, the window B 542 includes a title bar 542A, and the window B 542 and the window B 322 in the user interface 53 are different only in colors of title bars. It can be learned that the title bar 431A and the title bar 432A in the user interface 43 shown in FIG. 5D are black, and this indicates that the window C 541 and the window B 542 are windows in a same window group. The BC group icon 540 indicates that the window C 541 and the window B 542 are windows in a same window group, and the BC group icon 540 is used to display or minimize the windows in the window group corresponding to the icon, that is, the window C 541 and the window B 542.

**Further, two window switching rules after windows are grouped are described.**

**For example, a first window switching rule is: Window groups or a window group and an ungrouped window are not displayed simultaneously, and windows in a window group are displayed or minimized simultaneously.**

In some embodiments, an electronic device displays a group icon and an icon of an ungrouped window; the electronic device displays, in response to a user operation of displaying a window corresponding to the group icon, all windows in a window group corresponding to the group icon, and does not display all ungrouped windows and a window corresponding to another group icon; the electronic device does not display, in response to a user operation of minimizing the window corresponding to the group icon, all windows in the window group corresponding to the group icon; and the electronic device displays the ungrouped window in response to a user operation of displaying a window corresponding to the icon of the ungrouped window, and does not display any group window. The electronic device may simultaneously display a plurality of ungrouped windows.

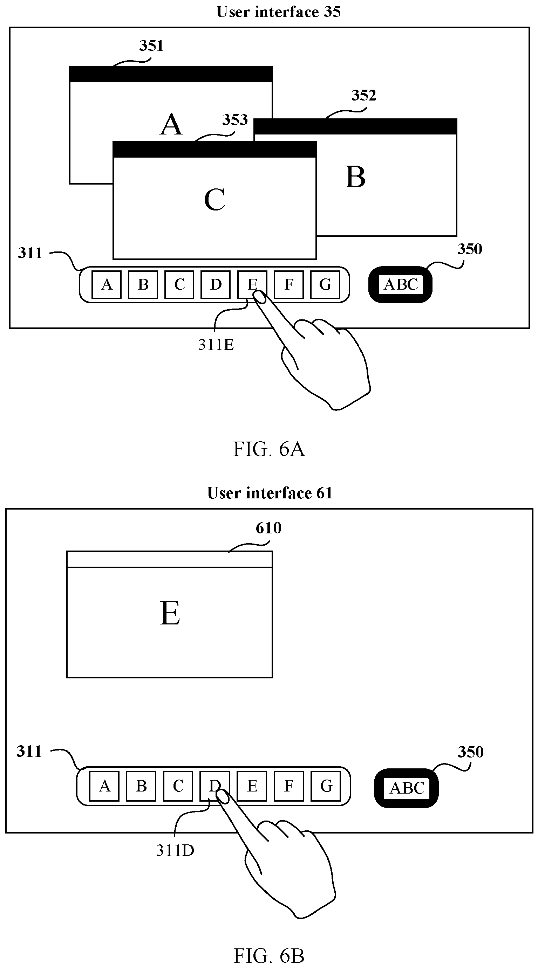

**First,** **FIG. 6A to FIG. 6D** **are used as examples to describe implementation of window grouping when the first window switching rule is used.**

As shown in FIG. 6A, when detecting a user operation on an icon control 311E in the user interface 35, the electronic device displays a window (for example, a window E) corresponding to the icon control 311E, and hides a window group displayed in the user interface 35, that is, the window group ABC. For example, the electronic device may display a user interface 61 shown in FIG. 6B.

The user interface 61 includes the taskbar 311, the group icon ABC 350, and a window E 610, where the taskbar 311 includes an icon control 311D, and the group icon ABC 350 indicates a window group formed by the window A, the window B, and the window C.

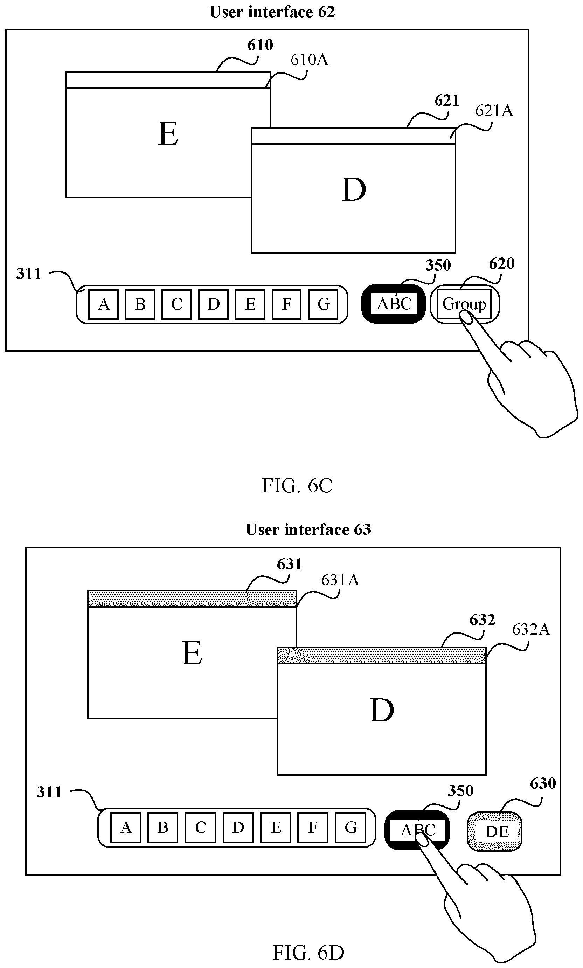

As shown in FIG. 6B, when detecting an operation on the icon control 311D, the electronic device displays a window (for example, a window D) corresponding to the icon control 311D. In this case, the electronic device displays two ungrouped windows, that is, the window E 610 and the window D corresponding to the icon control 311D, and the electronic device displays a group control. For example, the electronic device may display a user interface 62 shown in FIG. 6C when detecting the operation on the icon control 311D.

The user interface 62 includes the taskbar 311, the group icon ABC 350, the window E 610, a group control 620, and the window D 621. The window E 610 includes a title bar 610A, and the window D 621 includes a title bar 621A. The title bar 610A and the title bar 621A are both white. It can be learned that the window E 610 and the window D 621 are both ungrouped windows.

As shown in FIG. 6C, when detecting a user operation on the group control 620, the electronic device displays a user interface 63 shown in FIG. 6D.

The user interface 63 includes the taskbar 311, the group icon ABC 350, a group icon DE 630, a window E 631, and a window D 632. The window E 631 includes a title bar 631A, and the window E 631 and the window E 610 in the user interface 62 are different only in colors of title bars. The window D 632 includes a title bar 632A, and the window D 632 and the window D 621 in the user interface 62 are different only in colors of title bars. The title bar 610A and the title bar 621A are both gray. It can be learned that the window E 610 and the window D 621 are windows in a same window group (that is, a group DE).

It should be noted that different window groups may be distinguished by using different group identifiers, for example, a color or a pattern of a title bar, a color of a window control, and a color of a window border. This is not limited in embodiments of this application. For ease of description, in this embodiment of this application, a color (black and gray) of a title bar is used as a group identifier.

**Further,** **FIG. 6D to FIG. 6G** **are used as examples to describe implementation of window switching when the first window switching rule is used.**

In some embodiments, when detecting an operation on a group icon, the electronic device may display all windows in a window group corresponding to the group icon, and do not display a window in another window group or an ungrouped window.

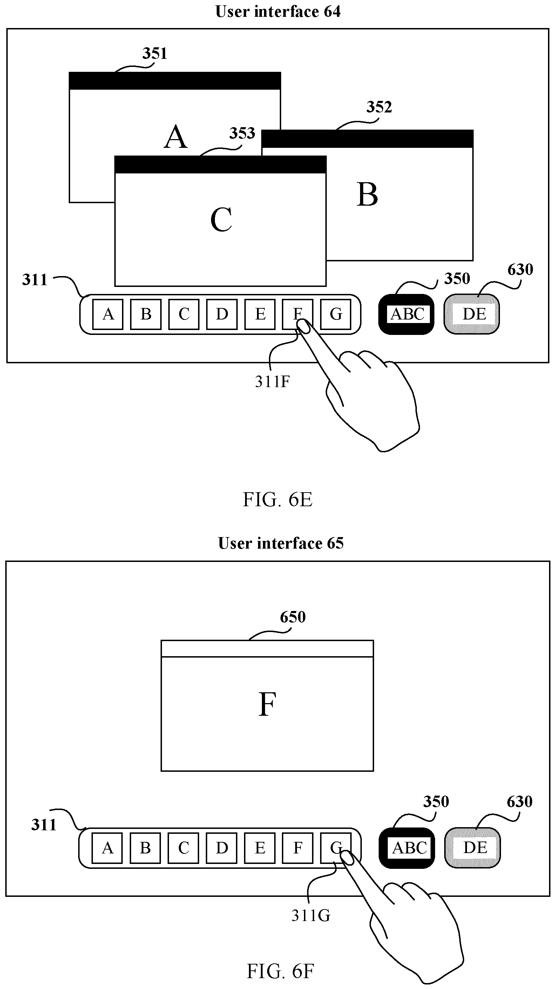

As shown in FIG. 6D, when detecting a user operation on the group icon ABC 350, the electronic device may display windows corresponding to the group icon ABC 350, and minimize windows of another window group, that is, windows of the group DE. For example, the electronic device may display a user interface 64 shown in FIG. 6E. The user interface 64 includes the taskbar 311, the group icon ABC 350, the group icon DE 630, the window A 351, the window B 352, and the window C 353. The taskbar 311 includes an icon control 311F.

As shown in FIG. 6E, when detecting a user operation on the icon control 311F, the electronic device displays a user interface 65 shown in FIG. 6F. The user interface 65 includes the taskbar 311, the group icon ABC 350, the group icon DE 630, and a window F 650. The taskbar 311 includes an icon 311F.

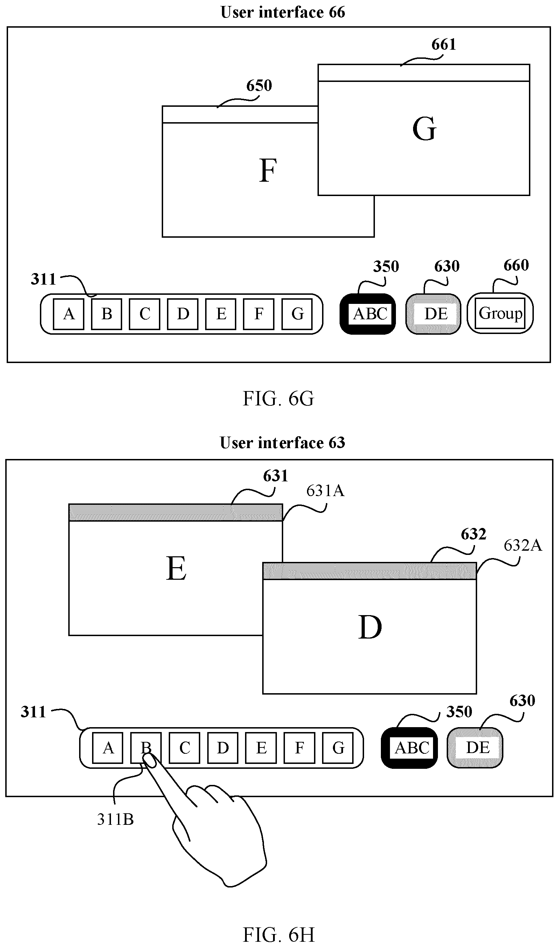

Further, as shown in FIG. 6F, when detecting a user operation on the icon control 311G, the electronic device displays a user interface 66 shown in FIG. 6G. The user interface 66 includes the taskbar 311, the group icon ABC 350, the group icon DE 630, the window F 650, a group control 660, and a window G 661.

In some other embodiments, when detecting an operation on an icon corresponding to a first window in a group icon, the electronic device may display all windows in a window group corresponding to the group icon, and does not display a window in another window group or an ungrouped window; and the electronic device displays the first window at a top level of all windows.

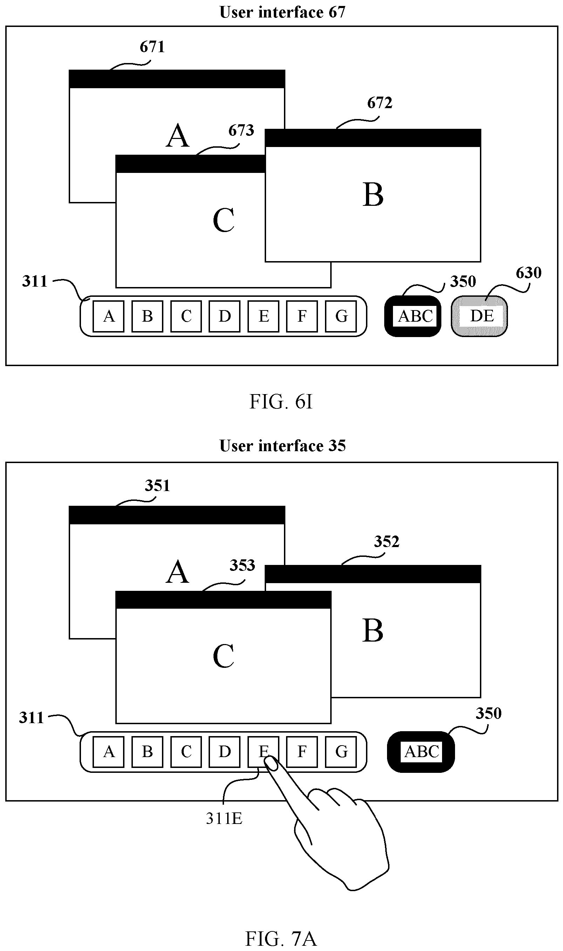

As shown in FIG. 6H, the electronic device displays the user interface 63. When detecting a user operation on the icon 311B, the electronic device displays a user interface 67 shown in FIG. 6I. The user interface 67 includes the taskbar 311, the group icon ABC 350, the group icon DE 630, a window A 671, a window B 672, and a window C 673. The window B 672 is a window corresponding to the icon 311B, and the window B 672 is located at a top level of all windows. It can be learned that, when detecting the user operation on the icon 311B, the electronic device displays all windows in the window group in which the window B corresponding to the icon 311B is located, and the window B 672 is located at the top level of all the windows in the window group.

**For example, a second window switching rule is: Window groups, a window group and an ungrouped window, and ungrouped windows may be displayed simultaneously.**

In some embodiments, an electronic device displays a group icon and an icon of an ungrouped window; the electronic device displays, in response to a user operation of displaying a window corresponding to the group icon, all windows in a window group corresponding to the group icon; the electronic device does not display, in response to a user operation of minimizing the window corresponding to the group icon, all windows in the window group corresponding to the group icon; and the electronic device displays the ungrouped window in response to a user operation of displaying a window corresponding to the icon of the ungrouped window.

**First,** **FIG. 7A to FIG. 7D** **are used as examples to describe implementation of window grouping when the second window switching rule is used. The following uses an example in which the window E and the window D are grouped into a window group DE for description.**

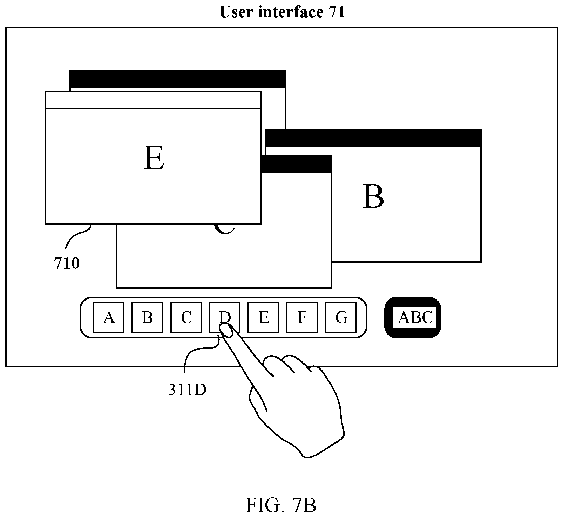

As shown in FIG. 7A, when detecting a user operation on the icon control 311E in the user interface 35, the electronic device displays a window (for example, the window E) corresponding to the icon control 311E, and does not change other windows, that is, does not change the window group ABC. For example, the electronic device may display a user interface 71 shown in FIG. 7B.

The user interface 71 includes a window E 710, and the user interface 71 is the same as the user interface 35 except that the window E 710 is newly added.

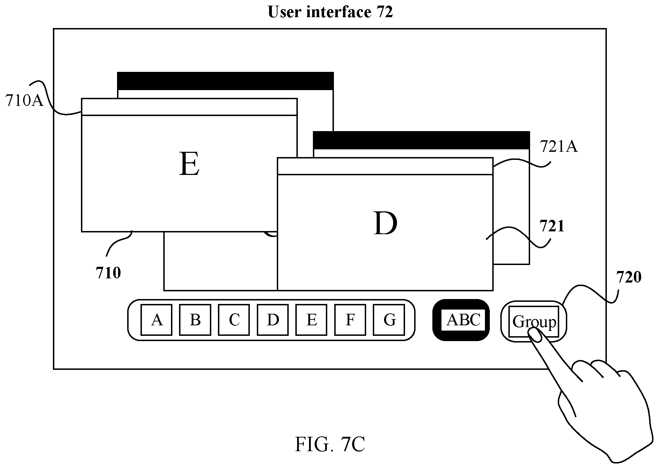

As shown in FIG. 7B, when detecting a user operation on the icon control 311D in the user interface 71, the electronic device may display, in response to the user operation, a user interface 72 shown in FIG. 7C.

The user interface 72 includes a group control 720 and a window D 721. The user interface 72 is the same as the user interface 71 except that the group control 720 and the window D 721 are newly added. In the user interface 72, the window E includes a title bar 710A, the window D 721 includes a title bar 721A, and colors of the title bar 710A and the title bar 721A are white. In other words, both the window E and the window D are ungrouped windows.

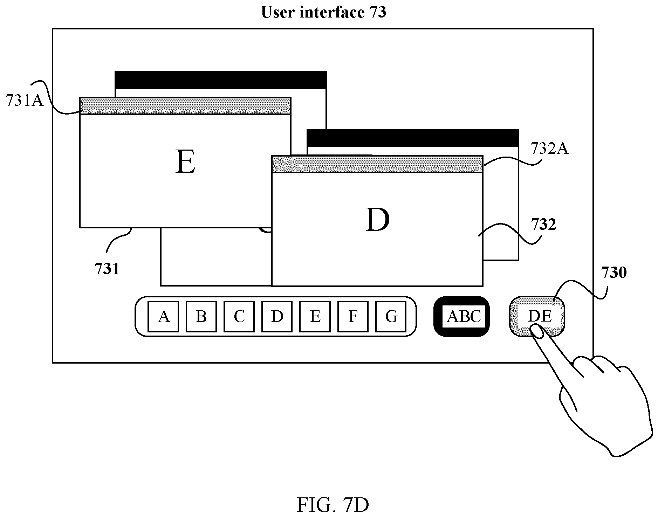

As shown in FIG. 7C, when detecting a user operation on the group control 720 in the user interface 72, the electronic device may display, in response to the user operation, a user interface 73 shown in FIG. 7D.

The user interface 73 includes a group icon DE 730, a window E 731, and a window D 732. The user interface 73 is the same as the user interface 35 except that the group icon DE 730, the window E 731, and the window D 732 are newly added.

The window E 731 includes a title bar 731A, and the window E 731 is the same as the window E 710 in the user interface 72 except that colors of the title bars are different. The window D 732 includes a title bar 732A, and the window D 732 is the same as the window D 721 in the user interface 72 except that colors of the title bars are different. The title bar 731A and the title bar 732A are gray. In other words, the window E and the window D are windows in a same group (that is, the window group DE), that is, windows corresponding to the group icon DE 730.

**Further,** **FIG. 7D to FIG. 7H** **are used as examples to describe implementation of window switching when the second window switching rule is used.**

In some embodiments, when detecting an operation on a group icon, the electronic device may display all windows of a window group corresponding to the group window at the top level, or minimize all windows of a window group corresponding to the group icon, and does not change displayed states of windows of another window group and ungrouped windows.

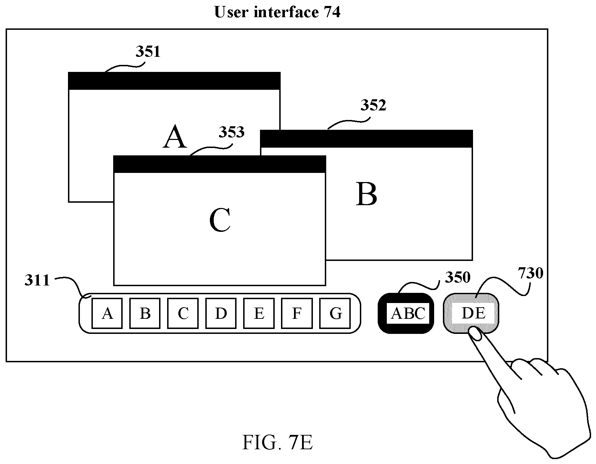

As shown in FIG. 7D, the electronic device displays windows (that is, the window A, the window B, and the window C) corresponding to the group icon ABC and windows (that is, the window E 731 and the window D 732) corresponding to the group icon DE 730. Further, when detecting a user operation on the group icon DE 730, the electronic device may minimize the windows (that is, the window E 731 and the window D 732) corresponding to the group icon DE 730, and does not change displayed states of other windows (that is, the windows corresponding to the group icon ABC). For example, the electronic device may display a user interface 74 shown in FIG. 7E.

The user interface 74 includes the taskbar 311, the group icon ABC 350, the group icon DE 730, the window A 351, the window B 352, and the window C 353.

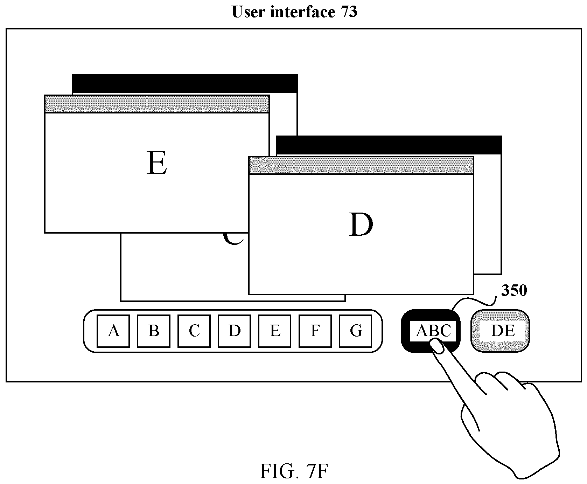

As shown in FIG. 7E, when detecting a user operation on the group icon DE 730, the electronic device displays a user interface 73 shown in FIG. 7F. The user interface 73 includes the group icon ABC 350. For related descriptions of the user interface 73, refer to the foregoing related descriptions.

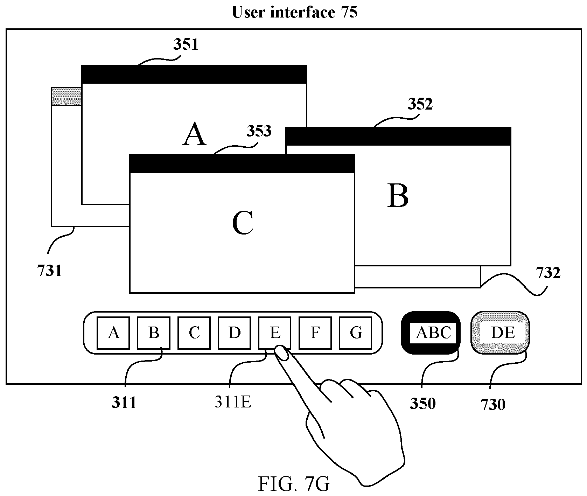

Further, when detecting a user operation on the group icon ABC 350, the electronic device displays a user interface 75 shown in FIG. 7G.

The user interface 75 includes the taskbar 311, the group icon ABC 350, the group icon DE 730, the window group corresponding to the group icon ABC 350 (that is, the window A 351, the window B 352, and the window C 353), and the window group corresponding to the group icon DE 730 (that is, the window E 731 and the window D 732). The window group corresponding to the group icon ABC 350 in the user interface 75 is located above the window group corresponding to the group icon DE 730, and except this, displayed content in the user interface 75 is the same as displayed content in the user interface 74.

In some other embodiments, when detecting an operation on an icon corresponding to a first window in a group icon, the electronic device may display all windows of a window group corresponding to the group window at the top level, or minimize all windows of a window group corresponding to the group icon, and does not change displayed states of windows of another window group and ungrouped windows. The first window is displayed at the top level of a window group corresponding to the group window.

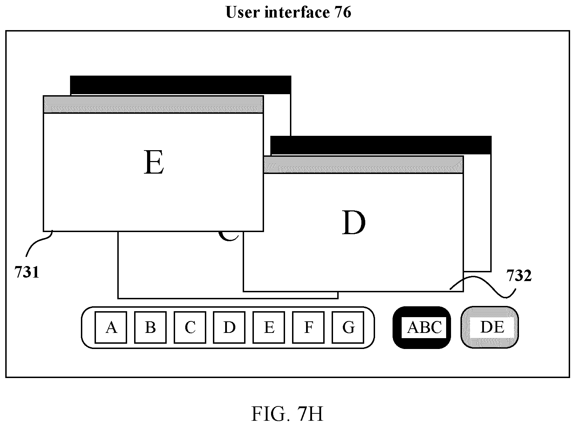

As shown in FIG. 7G, the electronic device displays the user interface 75. When detecting a user operation on the icon 311E, the electronic device displays a user interface 76 shown in FIG. 7H.

The user interface 76 includes the taskbar 311, the group icon ABC 350, the group icon DE 730, the window group corresponding to the group icon ABC 350 (that is, the window A 351, the window B 352, and the window C 353), and the window group corresponding to the group icon DE 730 (that is, the window E 731 and the window D 732). The window group corresponding to the group icon DE 730 in the user interface 75 is located above the window group corresponding to the group icon ABC 350, and the window E 731 is located at the top level of the window group corresponding to the group icon DE 730. It can be learned that when the electronic device detects the user operation on the icon 311E, the window group in which the window E corresponding to the icon 311E is located above another window group, and the window E is located at the top level of the window group in which the window E is located.

**The following describes an example group icon of a window group.**

In some embodiments, an electronic device may display a group icon corresponding to a window group, and the group icon may include a thumbnail of the window group and/or a level relationship diagram of the window group. A window layout in the thumbnail is consistent with a window layout in a window group in a user interface. The layout includes a window size, a location, and a level relationship. The level relationship diagram includes application icons (icons) corresponding to windows in the user interface. An order of the application icons corresponds to a level relationship of the windows, and an application icon corresponding to an upper-level window is arranged on a location further to the left.

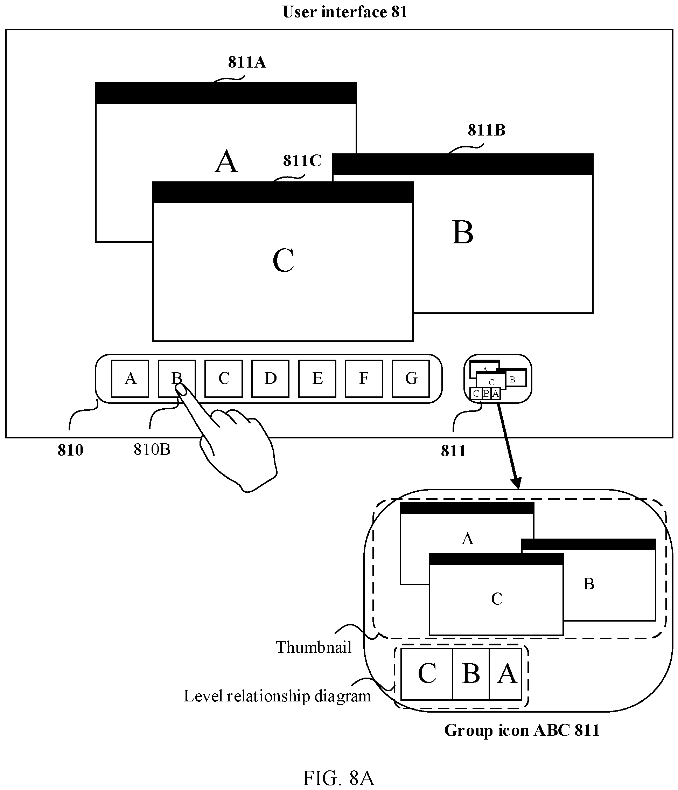

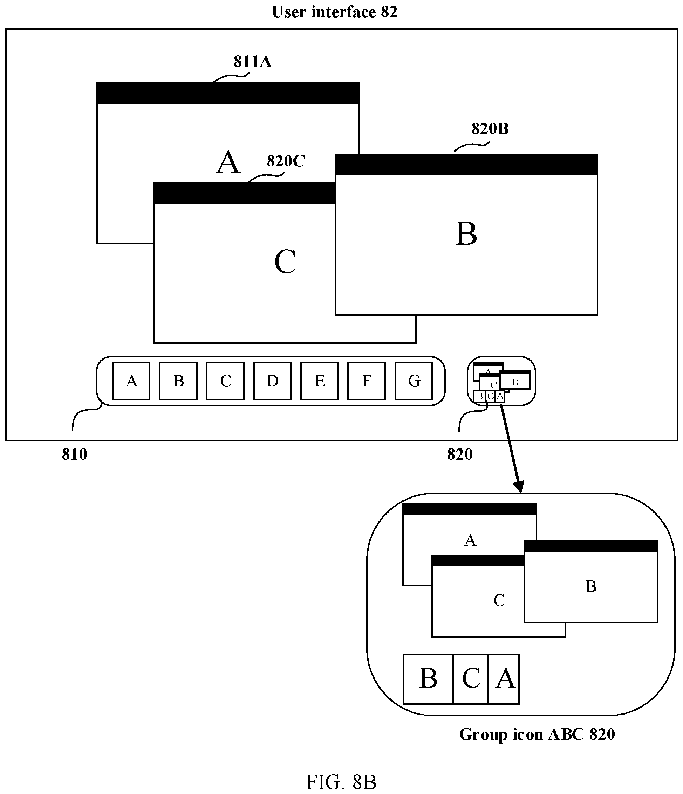

The following uses FIG. 8A and FIG. 8B as an example for description.

FIG. 8A is a diagram of a group icon according to an embodiment of this application. FIG. 8A shows an example of a user interface 81. The user interface 81 includes a taskbar 810, a group icon ABC 811, a window A 811A, a window B 811B, and a window C 811C. The taskbar 810 includes an icon 810B.

The group icon ABC 811 may include a thumbnail and/or a level relationship diagram. As shown in FIG. 8A, windows in the user interface 81 are the window C, the window B, and the window A sequentially from an upper level to a lower level. Therefore, the level relationship diagram in the group icon ABC 811 shows the window C, the window B, and the window A sequentially from left to right.

For example, as shown in FIG. 8A, when detecting a user operation on the icon 810B, the electronic device may display, in response to the user operation, a user interface 82 shown in FIG. 8B.

The user interface 82 includes the taskbar 810, a group icon ABC 820, the window A 811A, a window B 820B, and a window C 820C. The window B 820B in the user interface 82 is the same as the window B 811B in the user interface 81 except that window level relationships are different. The window C 820C in the user interface 82 is the same as the window B 811B in the user interface 81 except that window level relationships are different. As shown in FIG. 8B, windows in the user interface 82 are the window B, the window C, and the window A sequentially from an upper level to a lower level. Therefore, the level relationship diagram in the group icon ABC 811 is the window B, the window C, and the window A sequentially from left to right.

It should be noted that FIG. 8A and FIG. 8B are merely an example for describing the group icon, and should not limit the group icon in embodiments of this application. Specific implementation of the group icon is not limited in embodiments of this application.

**The following describes an embodiment of dismissing a window group.**

In some embodiments, a first window is a window in a window group. An electronic device may display a current group control, another group control, and an exit control in a title bar of the first window. The current group control is used for the window group corresponding to the first window, the another group control is used for joining another group, and the exit control is used for exiting the window group.

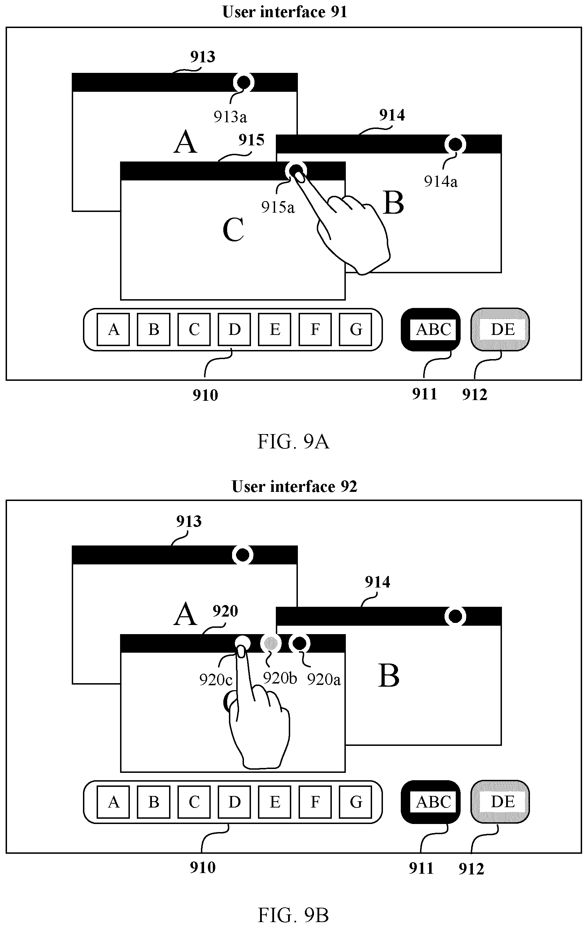

The following uses FIG. 9A to FIG. 9E as an example for description.

In an implementation, when detecting a user operation on the exit control on the first window, the electronic device may display the first window as an ungrouped window. For example, refer to the embodiments shown in FIG. 9A to FIG. 9C.

Refer to FIG. 9A. A user interface 91 is an example interface implemented on an electronic device according to an embodiment of this application. As shown in FIG. 9A, the user interface 91 includes a taskbar 910, a group icon ABC 911, a group icon DE 912, a window A 913, a window B 914, and a window C 915.

A window group corresponding to the group icon ABC 911 includes the window A 913, the window B 914, and the window C 915. A window group corresponding to the group icon DE 912 is not displayed in the user interface 91. A title bar of the window A includes a current group control 913a, a title bar of the window B 914 includes a current group control 914a, and a title bar of the window C 915 includes a current group control 915a.

As shown in FIG. 9A, title bars of the window A 913, the window B 914, and the window C 915 are all black, and a color of the group icon ABC 911 is also black. In this embodiment of this application, that the title bars are in a same color indicates that the window A 913, the window B 914, and the window C 915 all belong to a same window group (namely, a group ABC). In other words, the window group corresponding to the group icon ABC 911 includes the window A 913, the window B 914, and the window C 915.

As shown in FIG. 9A, when detecting a user operation on the current group control 915a, the electronic device displays a user interface 92 shown in FIG. 9B. The user interface 92 includes the taskbar 910, the group icon ABC 911, the group icon DE 912, the window A 913, the window B 914, and a window C 920.

A difference between the window C 920 and the window C 915 in the user interface 91 lies only in that controls in the title bars are different. Controls in the title bar in the window C 920 include a current group control 920a, an another group control 920b, and an exit control 920c.

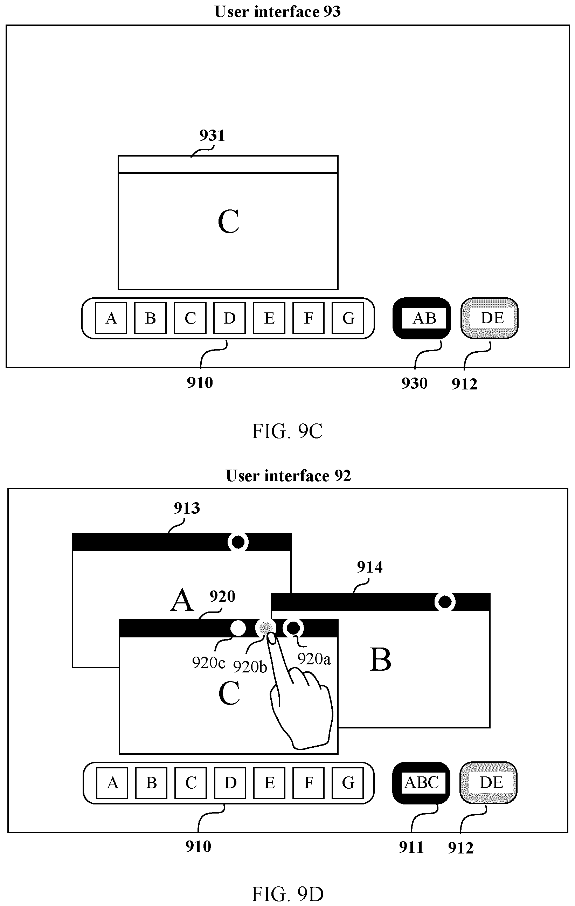

As shown in FIG. 9B, when detecting a user operation on the exit control 920c, the electronic device displays a user interface 93 shown in FIG. 9C. The user interface 93 includes the taskbar 910, the group icon DE 912, a group icon AB 930, and a window C 931. A title bar of the window C 931 is white, and the white title bar indicates that the window C 931 is an ungrouped window. Alternatively, when the electronic device detects a user operation on the exit control 920c, the electronic device may display a user interface including the taskbar 910, the group icon DE 912, a group icon AB 930, the window A 913, and the window B 914.

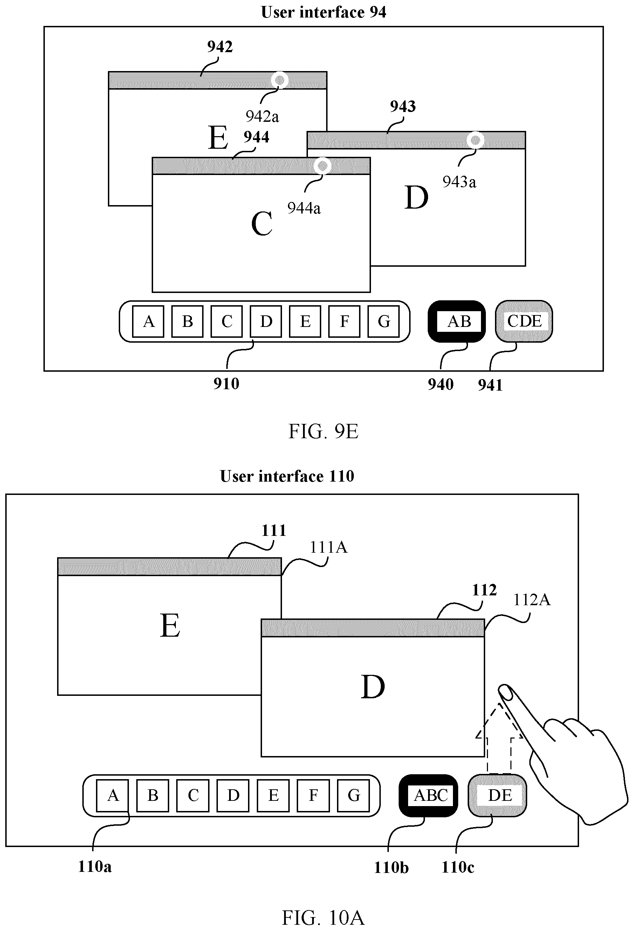

In another implementation, when detecting a user operation on the another group control in the first window, the electronic device may display the first window as another group of windows. For example, refer to the embodiments shown in FIG. 9D and FIG. 9E.

As shown in FIG. 9D, the user interface 92 includes the taskbar 910, the group icon ABC 911, the group icon DE 912, the window A 913, the window B 914, and the window C 920. The controls in the title bar in the window C 920 include the current group control 920a, the another group control 920b, and the exit control 920c. The another group control 920b and the exit control 920c are other selection controls that are expanded and displayed after the current group control 920a is touched or tapped. It should be noted that, in this embodiment of this application, for example, other selection controls are displayed in a left-expanded form. In another implementation of this embodiment of this application, other selection controls may alternatively be displayed in a vertical-expanded form (that is, upward or downward).

As shown in FIG. 9D, when detecting a user operation on the another group control 920b, the electronic device displays a user interface 94 shown in FIG. 9E. The user interface 94 includes the taskbar 910, a group icon AB 940, a group icon CDE 941, a window E 942, a window D 943, and a window C 944. A title bar of the window E 942 includes a current group control 942a, a title bar of the window D 943 includes a current group control 943a, and a title bar of the window C 944 includes a current group control 944a. The current group control 944a indicates that the window C 944 is a window in a window group corresponding to the group icon CDE 941, and the current group control 920a indicates that the window C 920 is a window in the window group corresponding to the group icon ABC 911. For example, the current group control 944a and the current group control 920a are located at a same location in the title bar of the window C. This current group control 944a and the another group control 920b have a same shape, different locations, and different meanings. The another group control 920b is a selection control corresponding to another window group that the window C can join, and the another group control 920b may be displayed only after the current group control 920a is touched or tapped. For example, the another group control 920b may be located at a location of another selection control that is expanded and displayed after the current group control 920a is touched or tapped. The another group control 920b may alternatively be always displayed in the title bar of the window C 920.

As shown in FIG. 9D, the title bars of the window E 942, the window D 943, and the window C 944 are all gray, and a color of the group icon CDE 941 is also gray. It should be understood that the same color indicates that the window E 942, the window D 943, and the window C 944 all belong to a same window group (namely, a group DE). In other words, the window group corresponding to the group icon CDE 941 includes the window E 942, the window D 943, and the window C 944. It can be learned that when the electronic device detects the user operation on the another group control 920b in the window C 920, the window C exits the group ABC and joins the group DE. In some other embodiments, when there are more window groups that can be joined, there may be more another group controls in the window C 920, and the user may add the window C to the corresponding window group by operating a corresponding control. For example, the electronic device may display a plurality of controls of different colors in the window C 920, and a control of one color indicates a window group. In this case, the user may add the window C 920 to different window groups by selecting controls of different colors. Correspondingly, the electronic device displays, in response to a selection operation of the user on one of the controls of different colors, the window C 920 as a window in a window group corresponding to the control.

In some other embodiments, the first window is a window in the window group. The electronic device may display a group icon of the window group. Therefore, when detecting a user operation on the group icon, the electronic device displays windows in the window group as ungrouped windows.

For example, refer to user interfaces shown in FIG. 10A to FIG. 10C.

FIG. 10A is a user interface 110 implemented on an electronic device according to an embodiment of this application. The user interface 110 includes a taskbar 110a, a group icon ABC 110b, a group icon DE 110c, a window E 111, and a window D 112. Title bars of the window E 111 and the window D 112 are gray, and the group icon DE 110c is gray. It can be learned that a window group corresponding to the group icon DE 110c includes the window E 111 and the window D 112.

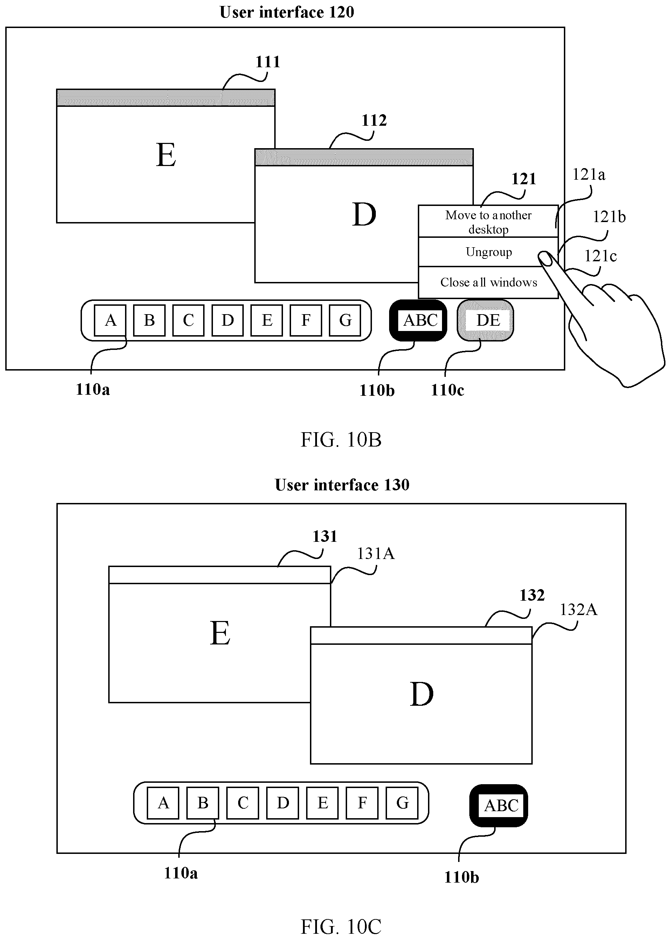

As shown in FIG. 10A, when detecting a slide-up operation on the group icon DE 110c, the electronic device displays, in response to the user operation, an option bar corresponding to the group icon DE 110c. For example, the electronic device may display a user interface 120 shown in FIG. 10B. The user interface 120 includes an option bar 121 corresponding to the group icon DE 110c. It should be noted that, the foregoing slide-up operation is used as an example herein. In an actual application, a user operation that is for the group icon DE 110c and that is used to display the user interface 120 may alternatively be a touch and hold operation and the like. When the electronic device is connected to an external mouse, the user operation may alternatively be an operation of right-clicking the mouse. This is not limited herein.

The user interface 120 may include the taskbar 110a, the group icon ABC 110b, the group icon DE 110c, the window E 111, the window D 112, and the option bar 121. The option bar 121 includes a move control 121a, an ungroup control 121b, and a close control 121c. The move control 121a is used to move the window group to another desktop, and for this part of content, refer to the following embodiment. The ungroup control 121b is used to ungroup the window group. The close control 121c is used to close all windows in the window group.

As shown in FIG. 10B, when detecting a user operation on the ungroup control 121b, the electronic device may display, in response to the user operation, a user interface 130 shown in FIG. 10C. The user interface 130 includes the taskbar 110a, the group icon ABC 110b, a window E 131, and a window D 132.

Title bars of the window E 131 and the window D 132 are white, and the window E 131 and the window D 132 are ungrouped windows. It should be understood that, the user interface 130 does not include the group icon DE 110c in the user interface 120. It can be learned that the window group of the window E 111 and the window D 112 corresponding to the group icon DE 110c in the user interface 120 are ungrouped.

It should be understood that, in another embodiment of this application, the electronic device may alternatively indicate a group state of a window in another manner. This is not limited in embodiments of this application.

For example, the electronic device may indicate a group state of a window through another control, and the another control may be a control in a title bar. As shown in FIG. 11A and FIG. 11B, the electronic device may use a color of a control in a title bar to indicate a group state of a window. For example, if a color of a control is white, a window is an ungrouped window, and if a color of a control is black shown in FIG. 11A or gray shown in FIG. 11B, a window is a grouped window. In addition, a same color of controls indicates windows in a same window group; otherwise, windows are not windows in a same window group. It can be learned that windows shown in FIG. 11A and FIG. 11B do not belong to a same window group.

**The following describes an embodiment of moving a window group to another desktop.**

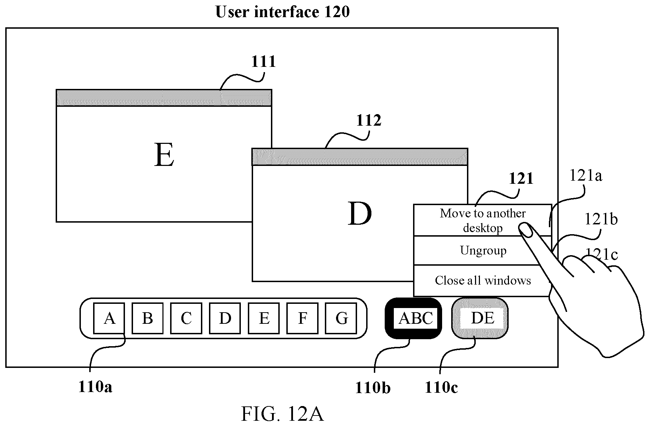

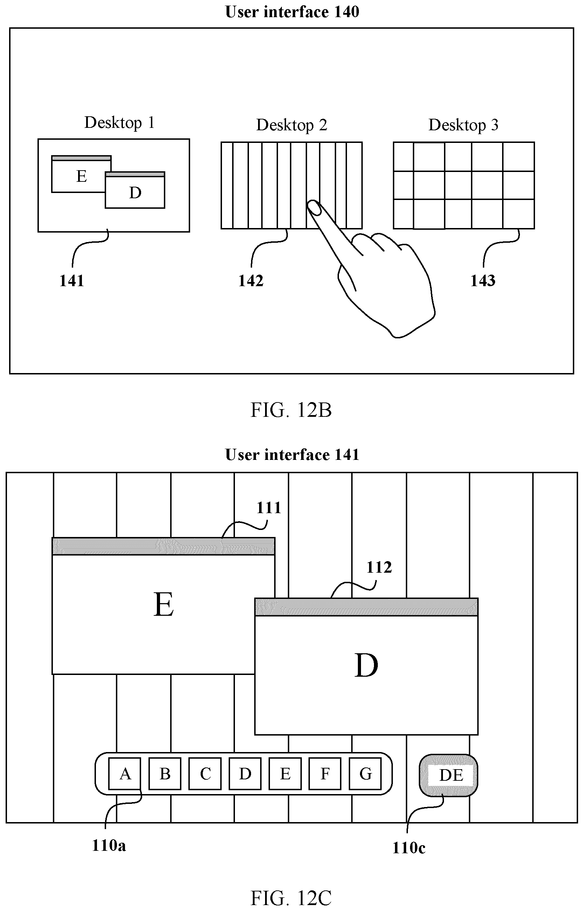

In some embodiments, as shown in FIG. 12A, the electronic device may display the user interface 120, where the user interface 120 includes the option bar 121 corresponding to the group icon DE 110c. Further, when detecting a user operation on the move control 121a, the electronic device displays, in response to the user operation, a user interface 140 shown in FIG. 12B. The user interface 140 includes a desktop 1 preview box 141, a desktop 2 preview box 142, and a desktop 3 preview box 143. In this embodiment of this application, for example, a white rectangular region indicates a desktop 1, a diagonal region indicates a desktop 2, and a grid region indicates a desktop 3.

It should be understood that the desktop in the user interface 140 is an example provided in this embodiment of this application. In an actual application, the user interface 140 may include more or fewer desktops. The desktop is not limited in embodiments of this application.

Further, when detecting a user operation on the desktop 2 preview box 142, the electronic device moves, in response to the user operation, the window group corresponding to the group icon DE 110c to the desktop 2. For example, the electronic device may display a user interface 141 shown in FIG. 12C.

As shown in FIG. 12C, oblique lines are on a background of the interface. In other words, the user interface 141 is an interface corresponding to the desktop 2. The user interface 141 includes the taskbar 110a, the group icon DE 110c, and the window group (that is, the window E 111 and the window D 112) corresponding to the group icon DE 110c.

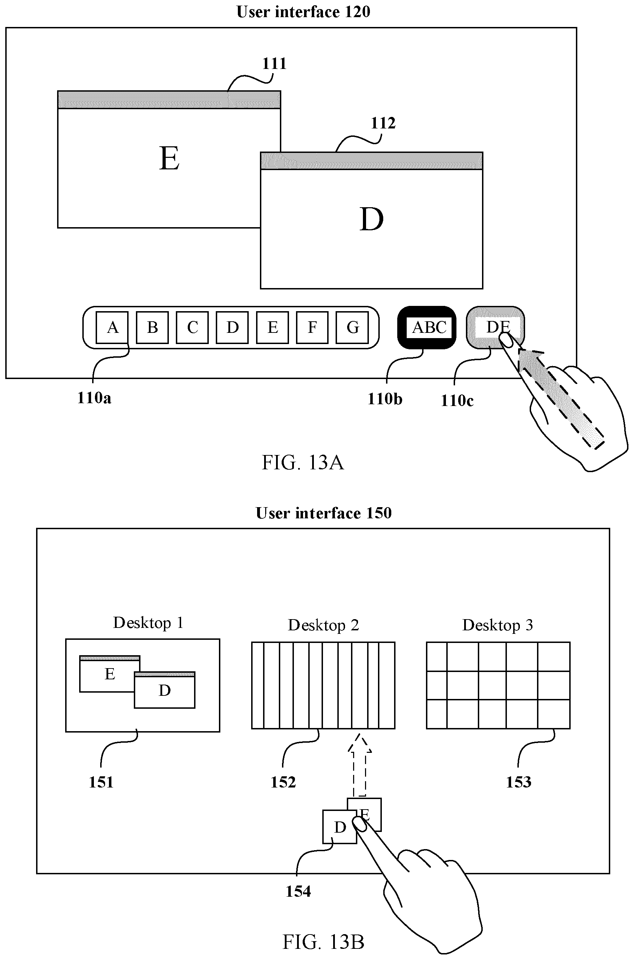

In some other embodiments, as shown in FIG. 13A, the electronic device may display a user interface 120, and the user interface 120 includes the group icon DE 110c. Further, when detecting a touch and hold operation on the group icon DE 110c, the electronic device may display, in response to the operation, a user interface 150 shown in FIG. 13B.

The user interface 150 includes a desktop 1 preview box 151, a desktop 2 preview box 152, a desktop 3 preview box 153, and an icon DE 154. The icon DE 154 may be in a dragging state. It should be noted that, the icon DE 154 in the user interface 150 may be the same as or different from the group icon DE 110c in the user interface 120. For example, when receiving the touch and hold operation shown in FIG. 13A, the electronic device displays the group icon DE 110c in the user interface 120 as the icon DE 154 in the user interface 150.

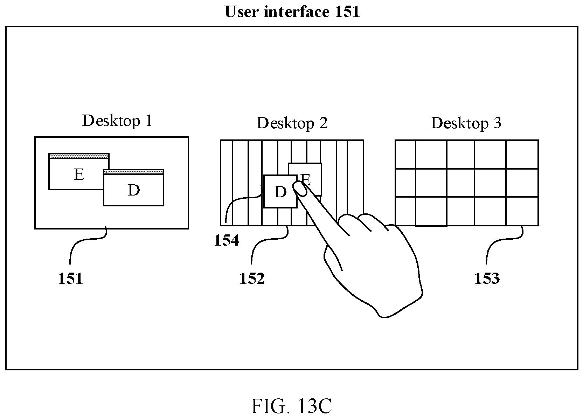

Further, when detecting a drag operation on the icon DE 154 in the user interface 150, the electronic device may move the icon DE 154 to another desktop in response to the operation. As shown in FIG. 13B, when detecting a user operation of dragging the icon DE 154 to the desktop 2, the electronic device moves the icon DE 154 to the desktop 2 in response to the user operation, and displays a user interface 151 shown in FIG. 13C.

As shown in FIG. 13C, oblique lines are on a background of the interface. In other words, the user interface 151 is an interface corresponding to the desktop 2. The user interface 151 includes a desktop 1 preview box 151, a desktop 2 preview box 152, a desktop 3 preview box 153, and an icon DE 154. The icon DE 154 in the user interface 151 and the icon DE 154 in the user interface 150 are different only in locations.

In this way, the user may no longer touch a display by raising the hand after dragging the icon DE 154 to the desktop 2. Correspondingly, when detecting a user operation of releasing after the icon DE 154 is dragged to the desktop 2, the electronic device displays the user interface 141 in FIG. 12C in response to the user operation. The user interface 141 is an interface corresponding to the desktop 2. The user interface 141 includes the taskbar 110a, the group icon DE 110c, and the window group (that is, the window E 111 and the window D 112) corresponding to the group icon DE 110c.

An embodiment of this application further provides an electronic device. The electronic device includes one or more processors and one or more memories, the one or more memories are coupled to the one or more processors, the one or more memories are configured to store computer program code, the computer program code includes computer instructions, and when the one or more processors execute the computer instructions, the electronic device is enabled to perform the method described in the foregoing embodiments.

An embodiment of this application further provides a computer program product including instructions. When the computer program product is run on an electronic device, the electronic device is enabled to perform the method described in the foregoing embodiments.

An embodiment of this application further provides a computer-readable storage medium, including instructions. When the instructions are run on an electronic device, the electronic device is enabled to perform the method described in the foregoing embodiments.

It can be understood that the various implementations of this application may be arbitrarily combined to achieve different technical effects.

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or some of the procedures of the methods in embodiments may be implemented by a computer program instructing related hardware. The program may be stored in a computer-readable storage medium. When the program is run, the procedures of the methods in embodiments are performed. The foregoing storage medium includes any medium that can store program code, such as a ROM or a random access memory RAM, a magnetic disk, or an optical disc.

In summary, the foregoing description is merely embodiments of the technical solutions of this application, but is not intended to limit the protection scope of this application. Any modification, equivalent substitution, and improvement made according to the disclosure of this application shall fall within the protection scope of this application.

## Claims

1. A window management method, applied to an electronic device, wherein the method comprises:
displaying, by the electronic device, a group control when displaying at least two windows;
when receiving a user operation on the group control, displaying, by the electronic device, a first group icon corresponding to the at least two windows, wherein the first group icon indicates a first window group obtained by grouping the at least two windows; and
managing, by the electronic device, the first window group when receiving a user operation on the first group icon.

2. The method according to claim 1, wherein the method further comprises:
changing, by the electronic device, a display style of the at least two windows from a first style to a second style when receiving the user operation on the group control.

3. The method according to claim 2, wherein the display style comprises at least one of a style of a title bar, a style of a control, and a style of a window border, and the style comprises at least one of a color, a pattern, and an area.

4. The method according to claim 2 or 3, wherein a color of the first group icon is the same as a color of the second style.

5. The method according to any one of claims 1 to 4, wherein the at least two windows are windows that are not completely shielded in windows running in a foreground or windows running in a foreground.

6. The method according to any one of claims 1 to 5, wherein the at least two windows are ungrouped windows.

7. The method according to any one of claims 1 to 6, wherein after the displaying a first group icon corresponding to the at least two windows, the method further comprises:
when receiving a user operation that indicates to display a window corresponding to a first icon, displaying, by the electronic device, the window corresponding to the first icon, wherein
the first icon is an icon corresponding to an ungrouped window or a group icon corresponding to a second window group, and the second window group comprises a plurality of windows.

8. The method according to claim 7, wherein the method further comprises:
minimizing, by the electronic device, the first window group when receiving the user operation that indicates to display the window corresponding to the first icon.

9. The method according to claim 7, wherein the displaying the window corresponding to the first icon comprises:
displaying, by the electronic device at a top level, the window corresponding to the first icon.

10. The method according to claim 9, wherein the first icon is the group icon corresponding to the second window group, a second icon is an icon corresponding to an application in the first window group, and after the displaying, by the electronic device at a top level, the window corresponding to the first icon, the method further comprises:
when receiving a user operation on the second icon, displaying, by the electronic device, the first window group on an upper level of the second window group, and displaying, at the top level, a window corresponding to the second icon.

11. The method according to any one of claims 1 to 10, wherein a third icon is an icon corresponding to an application in the first window group, and the method further comprises:
when receiving a user operation on the third icon, displaying, by the electronic device, the first window group, and displaying, at the top level, a window corresponding to the third icon.

12. The method according to any one of claims 1 to 11, wherein the first group icon comprises a thumbnail and/or a level relationship diagram of the first window group, the thumbnail of the first window group indicates a layout of the at least two windows in a user interface, and the level relationship diagram indicates levels at which the at least two windows are located.

13. The method according to any one of claims 1 to 12, wherein the at least two windows comprise a first window, and after the receiving a user operation on the group control, the method further comprises:
displaying, by the electronic device, a first control on a title bar of the first window, wherein the first control indicates that the first window belongs to the first window group; and
displaying, by the electronic device, at least one of an exit control and a second control when detecting a user operation on the first control, wherein the exit control is used for the first window to exit the first window group, the second control is used to add the first window to a third window group, and the third window group comprises a plurality of windows.

14. The method according to any one of claims 1 to 13, wherein the managing, by the electronic device, the first window group when receiving a user operation on the first group icon comprises:
displaying, by the electronic device, at least one of an ungroup control, a close control, and a move control when receiving a first user operation on the first group icon, wherein
the ungroup control is used to delete the first group icon and dismiss the first window group, the close control is used to close the first window group, and the move control is used to move the first window group to a selected desktop.

15. The method according to any one of claims 1 to 14, wherein the managing, by the electronic device, the first window group when receiving a user operation on the first group icon comprises:
when not displaying the first window group currently, displaying, by the electronic device, the first window group if receiving a second user operation on the first group icon; and
when displaying the first window group currently, minimizing, by the electronic device, the first window group if receiving a third user operation on the first group icon.

16. An electronic device, wherein the electronic device comprises one or more processors and one or more memories, the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 15.

17. A computer program product comprising instructions, wherein when the computer program product runs on an electronic device, the electronic device is enabled to perform the method according to any one of claims 1 to 15.

18. A computer-readable storage medium, comprising instructions, wherein when the instructions are run on an electronic device, the electronic device is enabled to perform the method according to any one of claims 1 to 15.
